# EUROPÄISCHE PATENTSCHRIFT

(11) **EP 3 770 085 B1**
(45) Veröffentlichungstag und Bekanntmachung des Hinweises auf die Patenterteilung: **29.07.2026**
(21) Anmeldenummer: 20180812.8
(22) Anmeldetag: 18.06.2020
(51) Int. Cl.: B65G 47/08

(54) **VERFAHREN UND VORRICHTUNG ZUM UMGANG MIT IN MINDESTENS EINER REIHE HINTEREINANDER BEWEGTEN STÜCKGÜTERN**
DEVICE AND METHOD FOR HANDLING PIECE GOODS MOVED BEHIND EACH OTHER IN AT LEAST ONE ROW
PROCÉDÉ ET DISPOSITIF DE MANIPULATION DE MARCHANDISES DÉPLACÉES LES UNES APRÈS LES AUTRES DANS AU MOINS UNE RANGÉE

(30) Priorität: 26.07.2019 DE 102019120289
(43) Veröffentlichungstag der Anmeldung: 27.01.2021
(73) Patentinhaber: Krones Aktiengesellschaft, 93073 Neutraubling (DE)
(72) Erfinder: BEER, Erhard, 93073 Neutraubling (DE); KIRZINGER, Johannes, 93073 Neutraubling (DE); KOLLMUSS, Manuel, 93073 Neutraubling (DE)
(74) Vertreter: Benninger, Johannes

(56) Entgegenhaltungen:
- WO-A1-2017/182217
- DE-A1- 102017 215 320
- US-A1- 2005 246 056

## Beschreibung

Die vorliegende Erfindung betrifft ein Verfahren und eine Vorrichtung zum Umgang mit in mindestens einer Reihe hintereinander bewegten Stückgütern gemäß den Merkmalen der unabhängigen Ansprüche.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinandergestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Das Dokument EP 1 465 101 A2 offenbart eine Vorrichtung zur Reihenbildung von Packgütern für Gebindepalletierer. Der Gebindepalletierer umfasst mindestens eine Lagenstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus der US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die EP 1 927 559 A1 offenbart einen Gruppiertisch zum Zusammenführen von Gebinden, insbesondere Schrumpfpacks, zur Schichtenbildung, umfassend einen kontinuierlich antreibbaren Förderer, einen dem Förderer nachgeordneten taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US 2005/0246056 A1 offenbart ein System zum Anordnen von Packstücken in einer Lage, die im weiteren Verlauf der Handhabung auf einer Palette abgelegt bzw. gestapelt werden. Dabei sind drei Förderbänder linear angeordnet. Über ein erstes Förderband werden die Packstücke der Vorrichtung zur Verfügung gestellt. Die Packstücke sind auf dem ersten Förderband linear angeordnet. Mit einem zweiten Förderband werden die Packstücke vereinzelt. Anschließend gelangen die Packstücke zu einem dritten Förderband, bei dem die Anordnung der Packstücke durchgeführt wird. Alle drei Förderbänder laufen mit unterschiedlichen, doch jeweils konstanten Geschwindigkeiten. Nachdem eine Lage fertig zusammengestellt ist, wird die Lage auf die Palette übergeführt.

Das Dokument WO 2017/182217 A1 offenbart ein Verfahren nach dem Oberbegriff des Anspruchs 1 und eine Vorrichtung nach dem Oberbegriff des Anspruchs 9. Es beschreibt ein Verfahren zum Umgang von in mindestens zwei parallelen Reihen bewegten Stückgütern. Hierbei werden wenigstens zwei in parallelen Reihen nebeneinander transportierte Stückgüter von einem Manipulator erfasst, von den mindestens zwei parallelen Reihen räumlich abgetrennt und in eine definierte relative Zielposition gebracht.

Der anhand von unterschiedlichen Dokumenten veranschaulichte bekannte Stand der Technik kann in der Praxis mehrere Nachteile mit sich bringen. Beim Lückenziehen oder Übergeben der Stückgüter zwischen Zuteilband, Transportband und ggf. auch Lagenbildungsband entsteht das Risiko, durch die jeweiligen Geschwindigkeitsunterschiede und hohen Beschleunigungs- und/oder entsprechend steilen Verzögerungsrampen die Stückgüter nicht in der anzustrebenden exakten Weise übergeben zu können. Einzelne Stückgüter können sich sogar von ihren vorgegebenen Positionen ab- oder wegdrehen. Eine nicht zu vernachlässigende Rolle spielt kommt zudem dem Reibwiderstand zwischen dem jeweiligen Förder- oder Transportband und der Unterseite des jeweiligen Stückgutes zu, was dazu führt, dass die Lücken zwischen den Takten nicht exakt reproduzierbar sind, sondern unterschiedlich ausfallen können. Zusätzlich kann ein Leistungsverlust entstehen, der sich durch den zurückzulegenden Weg der einzelnen Lücken beim sog. Eintakten vom Zuteilband auf das Transportband ergibt. Alle diese Effekte erhöhen die Zeitdauer, die für die Erstellung einer Palette benötigt wird.

Um diese Nachteile zu vermeiden, werden in der EP 2 107 018 A1 ein Verfahren und eine Vorrichtung vorgeschlagen, mit denen eine sichere, schnelle und qualitativ hochwertige Bereitstellung von Takten aus Gebinden und/oder Gebindegruppen möglich sein sollen, um solchermaßen die Reihen für die Lagen einer Palette auf effektive Weise erstellen zu können. Die vorgeschlagene Vorrichtung dient dem Zusammenstellen und Ausrichten von Gebindegruppen, wobei die Vorrichtung ein Zuteilband, ein Transportband und ein Reihen- oder Lagenbildungsband umfasst. Das Zuteilband, das Transportband und das Reihen- oder Lagenbildungsband ist zum Antrieb mit jeweils einem eigenen Motor versehen. Mittels einer Steuerung wird die Geschwindigkeit des Zuteilbandes reguliert, damit die auf dem Zuteilband Stoß an Stoß transportierten Gebinde bzw. Gebindegruppen auf dem Transportband in mehrere Takte aus Gebinden bzw. Gebindegruppen aufgeteilt werden können. Zwischen den einzelnen Takten werden vordefinierte Lücken gebildet. Dem Reihen- oder Lagenbildungsband kann ein Roboter zugeordnet sein, der die vom Transportband einlaufenden Takte zur Lagenbildung in Transportrichtung oder quer zur Transportrichtung verschieben und/oder drehen kann. Zudem soll das Lagenbildungsband die Erzeugung einer aus mehreren Reihen gebildeten Lage ermöglichen.

Aus der DE 10 2011 080 812 A1 ist weiterhin ein Verfahren zur Bildung von palettierfähigen Lagen aus nebeneinander stehenden Stückgütern auf einem Lagenbildungsplatz bekannt. Dem Lagenbildungsplatz ist ein programmgesteuerter Manipulator zum Abholen und/oder Überführen einzelner oder mehrerer Stückgüter an wenigstens zwei räumlich voneinander entfernten und/oder räumlich versetzten Zuführstationen und zum Positionieren durch Drehen und/oder Verschieben der Stückgüter in vorgebbare Freigabepositionen auf dem Lagenbildungsplatz zugeordnet.

Solche Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Ein Hauptziel ist es, eine präzise Positionierung von Stückgütern, Paketen, Gebinden und/oder Artikeln zu ermöglichen, insbesondere für eine möglichst störungsfreie und zuverlässige Lagenbildungs-, Palettierungs- und/oder Verpackungsvorbereitung. Ein Nebenziel, das jedoch zunehmend wichtiger wird, besteht darin, hierbei die Taktzeiten zu reduzieren, ohne den bereits erreichten Grad an Präzision zu reduzieren oder Einbußen hinsichtlich der bereits erreichten Zuverlässigkeit in Kauf nehmen zu müssen. Das Verfahren soll die Verarbeitung von Stückgütern ermöglichen, die in mindestens einer Reihe lückenlos befördert bzw. transportiert werden. Zudem soll das Verfahren mit höherer Geschwindigkeit ablaufen können als dies bisher möglich war, ohne dass damit Nachteile hinsichtlich der Positionierungspräzision und/oder der Zuverlässigkeit der Manipulation der Stückgüter in Kauf zu nehmen sind. Die entsprechende Vorrichtung soll schneller betreibbar sein als die aus dem Stand der Technik bekannten Manipulationsvorrichtungen, und dies bei zumindest annähernd gleicher Zuverlässigkeit und annähernd gleicher Stellpräzision.

Diese Ziele der Erfindung werden mit den Gegenständen der unabhängigen Ansprüche, d.h. mit einem Verfahren und mit einer Vorrichtung zum Umgang mit in mindestens einer Reihe hintereinander bewegten Stückgütern erreicht, welche die Merkmale der unabhängigen Patentansprüche umfassen. Merkmale vorteilhafter Weiterbildungen der Erfindung ergeben sich aus den jeweiligen abhängigen Ansprüchen.

Die Erfindung bezieht sich auf ein Verfahren nach Anspruch 1 und eine Vorrichtung nach Anspruch 9 zum Umgang mit in mindestens einer Reihe hintereinander bewegten Stückgütern. Hierbei werden die Stückgüter ohne Beabstandung unmittelbar aufeinanderfolgend als geschlossene Formation in einer Transportrichtung einem ersten Handhabungsmodul mit einem ersten Manipulator zur Handhabung von Stückgütern in einem dem ersten Manipulator zugeordneten ersten Erfassungsbereich zugeführt. Die Vorrichtung umfasst wenigstens eine Transporteinrichtung, über welche unmittelbar aufeinanderfolgende Stückgüter der Reihe ohne Beabstandung oder mit gegebenenfalls produktionsbedingter minimaler Beabstandung als geschlossene Formation mit einer Transportgeschwindigkeit in einer Transportrichtung transportiert und/oder dem ersten Handhabungsmodul zugeführt werden.

Mit dem Begriff der geschlossenen Formation ist eine weitgehend lückenlose Aufeinanderfolge von Stückgütern gemeint, die hintereinander transportiert werden. Die geschlossene Formation kann insbesondere als Endlos- Formation transportiert werden, die keine Unterbrechung aufweist und eine beliebige Anzahl von Stückgütern umfasst. Es kann produktionsabhängig vorkommen, dass innerhalb der geschlossenen Formation zwischen den Stückgütern kleine ungewünschte Lücken auftreten. Solche minimalen Abstände stören die Handhabung der Stückgüter in der Regel nicht, so dass auch in diesem Fall weiterhin von einer geschlossenen Formation gesprochen wird.

Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung, durch Klebeverbindungen o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die in Reihe hintereinander bewegten Stückgüter können dabei je nach Anforderung von nachfolgenden Handhabungsvorrichtungen gleich oder unterschiedlich ausgebildet sein.

Es ist vorgesehen, dass vor dem Eintritt der Stückgüter in das mindestens eine erste Handhabungsmodul Einheiten aus mindestens zwei hintereinander bewegten Stückgütern gebildet werden. Die Stückgüter innerhalb der Einheiten sind jeweils lückenlos hintereinander angeordnet. Die Stückgüter der Einheiten bilden mindestens zwei Stückguttakte, wobei jeder der Takte jeweils mindestens ein Stückgut umfasst. Es ist vorgesehen, dass ein erster Teil an Stückgütern der Einheit - nachfolgend auch als erster Stückguttakt bezeichnet - in eine erste Zielposition und/oder Zielanordnung verbracht wird und dass zumindest ein zweiter Teil an Stückgütern der Einheit - nachfolgend auch als zweiter Stückguttakt bezeichnet - in eine zweite Zielposition und/oder Zielanordnung verbracht wird. Die zweite Zielposition und/oder Zielanordnung ist hierbei beabstandet zu der ersten Zielposition und/oder Zielanordnung angeordnet und/oder ausgebildet.

Die Anordnung der Stückgüter des ersten Stückguttaktes und der Stückgüter des mindestens einen zweiten Stückguttaktes in der jeweiligen Zielposition und/oder Zielanordnung kann dabei jeweils innerhalb des ersten Handhabungsmoduls der Vorrichtung vorgenommen werden. Dabei kann eine Ausführungsform des Verfahrens vorsehen, dass beide Stückguttakte in zeitlich aufeinanderfolgenden Manipulationsschritten durch einen geeigneten ersten Manipulator erfasst und entsprechend gehandhabt werden. Eine weitere Ausführungsform kann vorsehen, dass nur einer der Takte durch den ersten Manipulator manipuliert und/oder gehandhabt wird, während die den mindestens einen anderen Takt bildenden Stückgüter der Einheit durch das mindestens eine erste Handhabungsmodul hindurch transportiert werden, ohne dabei manipuliert und/oder gehandhabt zu werden.

Die Stückgüter des mindestens einen anderen Taktes können beispielsweise in einem nachfolgenden Verarbeitungsmodul manipuliert und/oder gehandhabt und dabei in die zweite Zielposition und/oder Zielanordnung überführt werden. Alternativ können die Stückgüter des mindestens einen anderen Taktes bereits durch das Abtrennen der Einheit von der geschlossenen Formation und das Abtrennen der Stückgüter des ersten Taktes in der gewünschten zweiten Zielposition und/oder Zielanordnung vorliegen. In diesem Fall kann auch eine weitere Manipulation und/oder Handhabung der Stückgüter des mindestens einen anderen Taktes verzichtet werden.

Die Erfindung sieht vor, dass ein erster Teil der Stückgüter der Einheit in eine erste Zielposition und/oder Zielanordnung innerhalb des ersten Handhabungsmoduls verbracht wird. Dagegen wird ein zweiter Teil der Stückgüter der Einheit durch das mindestens eine erste Handhabungsmodul hindurch zu einem nachgeordneten zweiten Handhabungsmodul transportiert, ohne dass der zweite Teil der Stückgüter der Einheit innerhalb des ersten Handhabungsmoduls manipuliert und/oder gehandhabt wird. Stattdessen wird der zweite Teil der Stückgüter der Einheit innerhalb des zweiten Handhabungsmoduls in eine zweite Zielposition und/oder Zielanordnung verbracht.

Die Bildung der Einheiten umfassend Stückgüter für mindestens zwei Takte bzw. Stückgüter für die Anordnung in mindestens zwei unterschiedlichen Zielpositionen und/oder Zielanordnungen, erfolgt innerhalb eines Taktbildungsmodul. Das Taktbildungsmodul ist zwischen einer die Stückgüter in lückenloser Formation zuführenden Transporteinrichtung und dem ersten Handhabungsmodul angeordnet. Innerhalb des Taktbildungsmoduls wird dabei jeweils eine Einheit aus einer definierten Anzahl an Stückgütern gebildet wird, wobei die Stückgüter der Einheit in mindestens zwei voneinander beabstandete Zielpositionen und/oder Zielanordnungen verbracht werden. Insbesondere wird ein erster Teil an Stückgütern der Einheit, insbesondere mindestens ein Stückgut der Einheit, welches einen ersten Takt bildet, in eine erste Zielposition und/oder Zielanordnung verbracht.

Weiterhin wird mindestens ein zweiter Teil an Stückgütern der Einheit, insbesondere mindestens ein anderes Stückgut der Einheit, welches einen zweiten Takt bildet, in eine zweite Zielposition und/oder Zielanordnung verbracht. Vorzugsweise erfolgt dies in mindestens zwei zeitlich aufeinanderfolgenden Verfahrensschritten oder Manipulationsschritten.

Gemäß einer bevorzugten Ausführungsform der Erfindung umfasst eine Einheit jeweils zwei Stückguttakte, d.h. eine Anzahl von Stückgütern, die in genau zwei zeitlich aufeinanderfolgenden Verfahrensschritten oder Manipulationsschritten gehandhabt und/oder in zwei unterschiedliche Zielpositionen und/oder Zielanordnungen verbracht werden. Besonders bevorzugt erfolgt dabei einer der Verfahrensschritte innerhalb des ersten Handhabungsmoduls, während der zweite Verfahrensschritt innerhalb des zweiten Handhabungsmoduls vorgenommen wird.

Sofern innerhalb der Vorrichtung aus einer Mehrzahl an Stückgütern eine palettierfähige Stückgutlage zusammengestellt wird, ist gemäß einer bevorzugten Ausführungsform vorgesehen, dass die gebildeten Einheiten jeweils weniger Stückgüter als die auszubildende palettierfähige Stückgutlage umfassen. D.h., eine zu bildenden Stückgutlage umfasst die Stückgüter einer Mehrzahl von Einheiten, insbesondere von mindestens zwei Einheiten.

Bei der Bildung der Einheiten wird eine definierte Anzahl an Stückgütern von den nachlaufenden Stückgütern der geschlossenen Formation räumlich abgetrennt. Dies erfolgt vorzugsweise vermittels einer Bewegung der abzutrennenden Stückgüter in Transportrichtung. Gemäß einer Ausführungsform umfassen die gebildeten Einheiten jeweils dieselbe Anzahl an Stückgütern, von denen entsprechende Stückguttakte abgegriffen werden. Bevorzugterweise werden die gebildeten Einheiten jeweils individuell erstellt und umfassen jeweils eine Anzahl von Stückgütern für mindestens zwei Manipulationstakte, wobei berücksichtigt wird, dass in unterschiedlichen Manipulationsschritten gegebenenfalls unterschiedliche Mengen an Stückgütern manipuliert und/oder gehandhabt werden. Beispielsweise ist vorgesehen, dass die gebildete Einheit aus zwei hintereinander bewegten Stückgütern besteht, wobei eines der Stückgüter innerhalb des ersten Handhabungsmoduls in die erste Zielposition und/oder Zielanordnung verbracht wird, während das andere Stückgut innerhalb des zweiten Handhabungsmoduls in die zweite Zielposition und/oder Zielanordnung verbracht wird.

Gemäß einer Ausführungsform umfasst das Taktbildungsmodul zur Ausbildung der Einheiten eine vor dem ersten Handhabungsmodul angeordneten Transporteinheit für Stückgüter. Die Transporteinheit wird beispielsweise durch ein Förderband o.ä. gebildet, dass fluchtend zur Transporteinrichtung angeordnet ist und sich in dieselbe Transportrichtung wie die Transporteinrichtung und im Wesentlichen mit derselben Fördergeschwindigkeit wie die Transporteinrichtung bewegt. Nachdem die entsprechende Anzahl an Stückgütern, die eine Einheit bilden, von der Transporteinrichtung auf die Transporteinheit des Taktbildungsmoduls übergetreten ist, wird die Fördergeschwindigkeit der Transporteinheit des Taktbildungsmoduls zumindest kurzzeitig erhöht.

Dadurch werden die auf der Transporteinheit des Taktbildungsmoduls angeordneten Stückgüter mit einer gegenüber der Transportgeschwindigkeit der geschlossenen Formation erhöhten Geschwindigkeit bewegt, wodurch ein Abstand zu den nachlaufenden Stückgütern der geschlossenen Formation erzeugt und die auf der Transporteinheit angeordneten Stückgüter als Einheit räumlich von den nachlaufenden Stückgütern der geschlossenen Formation abgetrennt werden.

Gemäß einer alternativen Ausführungsform umfasst das Taktbildungsmodul einen taktbildenden Manipulator. Dieser erfasst eine entsprechende Anzahl von eine Einheit aus mindestens zwei Stückguttakten bildenden Stückgütern und beaufschlagt diese vorzugsweise mit einer Bewegungskomponente in Transportrichtung, um die Stückgüter der Einheit von den nachgeordneten Stückgütern der Formation räumlich abzutrennen. Der taktbildende Manipulator kann beispielsweise durch einen Roboter mit Greiferkopf gebildet sein. Dabei kann vorgesehen sein, dass die Stückgüter durch den Greiferkopf erfasst und in Richtung des ersten Handhabungsmoduls verschoben werden. Das Verschieben kann dabei insbesondere fluchtend zu den Stückgütern der Formation in Transportrichtung erfolgen.

Gegebenenfalls kann durch den taktbildenden Manipulator auch eine seitliche Bewegungskomponente auf die Stückgüter der Einheit aufgebracht werden, so dass die Stückgüter der Einheit seitlich versetzt zu den Stückgütern der Formation dem ersten Handhabungsmodul zugeführt werden. Ein taktbildender Manipulator kann auch verwendet werden, wenn die Stückgüter nachfolgend innerhalb des ersten Handhabungsmoduls beispielsweise in einer um 90 Grad gedrehten Transportrichtung weiterbewegt werden. Eine solche Anordnung der Module der Vorrichtung kann beispielsweise bei einem geringen Aufstellplatz vorteilhaft sein.

Dem Taktbildungsmodul kann mindestens ein geeignetes Detektionsmittel, beispielsweise ein Sensor, insbesondere eine Kamera mit Bildauswertung o.ä. zugeordnet sein, der die Ausbildung der Einheiten überwacht. Insbesondere erkennt der Sensor, wenn eine Anzahl an die Einheit bildenden Stückgütern innerhalb des Taktbildungsmoduls angeordnet ist und übermittelt die Information an eine Steuerungseinrichtung. Die Steuerungseinrichtung aktiviert die Abtrennung der Einheiten von den nachfolgenden Stückgütern der Formation durch eine entsprechende Regulierung und Ansteuerung der Transporteinheit oder des taktbildenden Manipulators.

Das erste Handhabungsmodul umfasst einen ersten Manipulator. Der erste Manipulator weist einen ersten Erfassungsbereich auf. Innerhalb des ersten Erfassungsbereichs kann der erste Manipulator Stückgüter der Einheit erfassen und manipulieren und/oder handhaben. Der erste Manipulator kann Stückguttakte von der Einheit abgreifen, von den weiteren Stückgütern der Einheit abtrennen und die erfassten Stückgüter des jeweiligen Stückguttaktes innerhalb seines ersten Erfassungsbereichs in eine Zielposition und/oder Zielposition verbringen. Dies erfolgt insbesondere in zeitlich aufeinanderfolgenden Manipulationsschritten.

Vorzugsweise ist vorgesehen, dass das erste Handhabungsmodul eine erste Horizontalfördereinrichtung umfasst. Dabei handelt es sich vorzugsweise um ein Förderband oder ähnliches, das insbesondere fluchtend zur Transporteinrichtung angeordnet ist. Die erste Horizontalfördereinrichtung wird vorzugsweise mit einer Fördergeschwindigkeit und einer Förderrichtung betrieben, die der Transportgeschwindigkeit und der Transportrichtung der zuführenden Transporteinrichtung entsprechen. D.h., die Einheiten werden innerhalb der ersten Horizontalfördereinrichtung mit derselben Fördergeschwindigkeit wie die Stückgüter der Formationen bewegt.

Der erste Manipulator ist zum klemmenden Entgegennehmen mindestens eines Stückgutes aus der Einheit von Stückgütern ausgebildet. Das mindestens eine vom Manipulator erfasste Stückgut bildet den ersten Teil oder ersten Stückguttakt und wird von den restlichen Stückgütern der Einheit räumlich abgetrennt. Das mindestens eine den ersten Takt bildende Stückgut wird durch den Manipulator in eine erste Zielposition und/oder Zielausrichtung innerhalb der ersten Handhabungseinrichtung überführt und in dieser Zielposition und/oder Zielausrichtung durch den Manipulator freigegeben.

Bei dem Erfassen und/oder bei dem Abgreifen des mindestens einen Stückgutes von der vorab gebildeten Einheit wird das erfasste mindestens eine Stückgut in seiner Bewegung in Transportrichtung normalerweise nicht abgebremst. Stattdessen erhält das mindestens eine Stückgut nach dem Erfassen durch den ersten Manipulator der Vorrichtung mindestens eine zusätzliche Geschwindigkeits- und/oder Richtungskomponente, um das mindestens eine Stückgut des erfassten ersten Taktes von den restlichen Stückgütern der Einheit, die mindestens einen zweiten Takt oder gegebenenfalls noch weitere Takte bilden, abzutrennen.

Insbesondere kann vorgesehen sein, dass mindestens eines der in Transportrichtung vorauseilenden Stückgüter der Einheit als erster Takt erfasst und innerhalb des mindestens einen ersten Handhabungsmoduls in die erste Zielposition und/oder Zielanordnung verbracht wird. Hierbei ist insbesondere vorgesehen, dass die Geschwindigkeitskomponente nicht negativ gegenüber der Geschwindigkeit der nachfolgenden Stückgüter der Einheit sein darf und die Richtungskomponente nicht entgegen der Transportrichtung der nachfolgenden Stückgüter der Einheit gerichtet sein darf. Ansonsten bestünde eine Kollisionsgefahr zwischen dem erfassten Stückgut und den nachfolgenden Stückgütern der Einheit.

Gemäß einer weiteren Ausführungsform kann mindestens eines der in Transportrichtung nachlaufenden Stückgüter der Einheit als erster Takt erfasst und innerhalb des mindestens einen ersten Handhabungsmoduls in die erste Zielposition und/oder Zielanordnung verbracht werden. Hierbei kann die Geschwindigkeitskomponente zumindest kurzzeitig negativ gegenüber der Geschwindigkeit der vorauseilenden Stückgüter der Einheit und gegenüber den nachfolgenden Stückgütern der Formation sein, d.h., die Geschwindigkeit des erfassten Stückguttaktes wird gegenüber den restlichen Stückgütern der Einheit verzögert. Dadurch kann die Richtungskomponente des erfassten Stückguttaktes kurzzeitig entgegen der Transportrichtung der nachfolgenden Stückgüter der Formation gerichtet sein, wobei darauf geachtet werden muss, dass keine Kollision zwischen dem erfassten Stückguttakt und den nachfolgenden Stückgütern erfolgt.

Eine alternativ Ausführungsform einer Einheit, die mindestens drei abzugreifende Stückguttakte umfasst, kann vorsehen, dass mindestens ein mittiges Stückgut der Einheit als erster Takt erfasst und innerhalb des mindestens einen ersten Handhabungsmoduls in die erste Zielposition und/oder Zielanordnung verbracht wird. Hierbei ist insbesondere vorgesehen, dass der erfasste Stückguttakt zuerst eine Bewegungskomponente senkrecht zur Transportrichtung erhält, um die erfassten Stückgüter aus der Einheit heraus räumlich von den anderen Stückgütern der Einheit bzw. von den anderen Stückguttakten der Einheit abzutrennen.

Wenn im Zusammenhang der vorliegenden Erfindung von einer Zielposition und/oder Zielausrichtung die Rede ist, so kann dies insbesondere bedeuten, dass die Stückgüter durch den jeweiligen Manipulator erfasst, verschoben und/oder gedreht werden können, wobei die Stückgüter wahlweise auch nur verschoben (ohne Drehung) bzw. nur gedreht (ohne Verschiebebewegung) werden können.

Wenn von einer unveränderten oder neuen Ausrichtung die Rede ist, so ist damit im Zusammenhang mit der vorliegend beschriebenen Vorrichtung insbesondere die winkelige Ausrichtung der zuvor erfassten und vom Manipulator bewegten und/oder verschobenen und/oder gedrehten Stückgüter die Rede.

Mit dem Begriff des Erfassens ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung der Zielposition und/oder Zielausrichtung gemeint.

Eine Ausführungsform sieht weiterhin vor, dass das mindestens eine den mindestens einen zweiten Takt der Einheit bildende Stückgut in einem nachfolgenden Manipulationsschritt durch den ersten Manipulator des ersten Handhabungsmoduls klemmend und/oder kraftschlüssig und/oder formschlüssig erfasst und in die zweite Zielposition und/oder Zielanordnung verbracht wird. Sofern die Einheit mehr als zwei Stückguttakte umfasst, wird das mindestens eine Stückgut des zweiten Taktes hierbei von den weiteren Stückgütern des mindestens einen weiteren (dritten etc.) Taktes der Einheit abgetrennt.

Die Erfindung sieht vor, dass das mindestens eine Stückgut mindestens eines Taktes der Einheit nicht durch den ersten Manipulator erfasst und manipuliert und/oder gehandhabt wird, sondern stattdessen innerhalb des ersten Handhabungsmoduls kontinuierlich in Transportrichtung zu einem nachgeordneten zweiten Handhabungsmodul oder einem anderen geeigneten Verarbeitungsmodul bewegt wird. Diese Stückgüter durchlaufen das erste Handhabungsmodul in Transportrichtung, ohne innerhalb des ersten Handhabungsmodul direkt oder indirekt in ihrer relativen Position, insbesondere relativ zu den in eine entsprechende Zielposition und/oder Zielanordnung verbrachten Stückgüter der Einheit oder zu den nachfolgenden Stückgütern der geschlossenen Formation, manipuliert zu werden.

Die Vorrichtung umfasst ein zweites Handhabungsmodul, das dem ersten Handhabungsmodul in Transportrichtung nachgeordnet ist. Das zweite Handhabungsmodul umfasst einen zweiten Manipulator, der zum klemmenden Entgegennehmen des mindestens einen verbleibenden Stückgutes der Einheit, insbesondere des mindestens einen Stückgutes des mindestens einen zweiten Stückguttaktes der Einheit, ausgebildet ist.

Das mindestens eine verbleibende Stückgut der Einheit bildet insbesondere den mindestens einen zweiten Takt der Einheit. Die Erfindung sieht vor, dass der erste Manipulator im ersten Handhabungsmodul einen ersten Takt der Einheit abgreift, von den anderen Stückgütern der Einheit räumlich abtrennt und in eine erste Zielposition und/oder Zielanordnung innerhalb des ersten Handhabungsmoduls verbringt.

Die weiteren Stückgüter der Einheit werden währenddessen kontinuierlich in Transportrichtung in Richtung des zweiten Handhabungsmoduls bewegt. Der zweite Stückguttakt wird durch den zweiten Manipulator des zweiten Handhabungsmoduls erfasst und in eine zweite Zielposition und/oder Zielausrichtung innerhalb des zweiten Handhabungsmoduls überführt. Vorzugsweise handelt es sich bei dem ersten und dem zweiten Handhabungsmoduls jeweils um identisch ausgebildete Module, beispielsweise Gruppiermodule oder Drehsysteme und/oder Verteilsysteme.

Gemäß der Erfindung ist vorgesehen, dass die in den ersten Erfassungsbereich des ersten Handhabungsmoduls einlaufende Einheit aus mindestens zwei Stückguttakten und/ oder die in den zweiten Erfassungsbereich des zweiten Handhabungsmoduls einlaufenden Stückgüter, insbesondere die in eine entsprechende Zielposition und/oder Zielanordnung verbrachten Stückgüter mindestens eines ersten Taktes der Einheit und/oder die nicht innerhalb des ersten Handhabungsmoduls manipulierten Stückgüter mindestens eines zweiten Taktes der Einheit innerhalb des ersten Erfassungsbereiches und/oder innerhalb des zweiten Erfassungsbereiches, nach Freigabe durch den Manipulator - sofern anwendbar - weiter kontinuierlich in Transportrichtung bewegt werden.

Insbesondere werden die Stückgüter mit einer Fördergeschwindigkeit bewegt, die der Transportgeschwindigkeit der Stückgüter der geschlossenen Formation entspricht. Insbesondere kann das Verfahren wahlweise oder zusätzlich vorsehen, dass das wenigstens eine Stückgut eines vom ersten oder zweiten Manipulator erfassten Taktes bei Erreichen oder unmittelbar nach Erreichen seiner Zielposition und/oder Zielausrichtung nach Freigabe durch den ersten oder zweiten Manipulator ohne Unterbrechung und/oder Geschwindigkeits- und/oder Richtungsänderung weitertransportiert werden kann.

Vorzugsweise ist vorgesehen, dass vermittels der beschriebenen Vorrichtung aus einer Mehrzahl von Stückgütern mindestens eine palettierfähige Lagenanordnung oder Stückgutlage zusammengestellt wird. Gemäß einer bevorzugten Ausführungsform wird aus einer Mehrzahl von Stückgütern innerhalb des Handhabungsmoduls und/oder innerhalb des zweiten Handhabungsmoduls jeweils mindestens eine palettierfähige Lagenanordnung oder Stückgutlage zusammengestellt. Die jeweils erstellte eine palettierfähige Lagenanordnung oder Stückgutlage kann noch Lücken zwischen den Stückgütern aufweisen.

Die kompakte palettierfähige Lage wird vorzugsweise in einem nachfolgenden Palettierungsmodul durch Zusammenschieben der Stückgüter vor der anschließenden Palettierung fertiggestellt.

Eine alternative Ausführungsform kann vorsehen, dass bei einer Vorrichtung mit zwei Handhabungsmodulen die Anordnung von Stückgütern durch den ersten Manipulator im ersten Handhabungsmodul und die Anordnung von Stückgütern durch den zweiten Manipulator im zweiten Handhabungsmodul zur Ausbildung einer gemeinsamen Stückgutlage dient, die anschließend dem Palettierungsmodul zur weiteren Verarbeitung zugeführt wird.

Bei dem erfindungsgemäßen Verfahren und der erfindungsgemäßen Vorrichtung ist insbesondere vorgesehen, dass Stückgüter lückenlos als geschlossene Formation zugeführt werden. Bevor die Stückgüter jedoch in einem entsprechenden Handhabungsmodul gemäß der nachfolgenden Verarbeitung manipuliert und/oder gehandhabt werden, erfolgt eine sogenannte Eintaktung. Unter Eintaktung ist das Abtrennen von Stückguteinheiten zu verstehen, wobei jede Stückguteinheit aus mindestens zwei nachfolgend innerhalb der Vorrichtung zu bearbeitenden Stückguttakten besteht.

Jeder Stückguttakt umfasst dabei mindestens ein Stückgut, dass eine Zielposition und/oder Zielanordnung einnimmt, die beabstandet ist zur Zielposition und/oder Zielanordnung von Stückgütern anderer Stückguttakte.

Auch wenn von einer nachfolgenden Bearbeitung der Stückguttakte oder Takte gesprochen wird, kann wahlweise vorgesehen sein, dass die Stückgüter eines Taktes ohne weitere Manipulation und/oder Handhabung einem nachfolgenden Verarbeitungsmodul zugeführt werden, beispielsweise weil die Positionierung durch das Abtrennen der Einheit von der geschlossenen Formation bereits der korrekten Positionierung für die nachfolgende Verarbeitung entspricht. Die Stückgüter innerhalb der gebildeten Zweitakt-Einheiten oder Mehrtakt-Einheiten sind lückenlos hintereinander angeordnet. Der erste Manipulator des mindestens einen ersten Handhabungsmoduls greift die Stückgüter taktweise von der Einheit ab.

Die hier beschriebene Vor-Taktung, d.h. die Bildung von Zweitakt-Einheiten oder die Bildung von Mehrtakt- Einheiten, dienen einer Erhöhung der Leistung der Vorrichtung, insbesondere bei Verwendung eines Standard- Zulaufs. Insbesondere bei Ausführungsformen, bei denen zumindest die Stückgüter eines Taktes der Einheit nicht weiter manipuliert werden müssen, kann somit die Verarbeitungszeit innerhalb des mindestens einen Handhabungsmoduls reduziert werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1 bis 7 zeigen schematisch einen zeitlichen Ablauf eines erfindungsgemäßen Verfahrens zum Umgang mit in mindestens einer Reihe hintereinander bewegten Stückgütern durch eine entsprechende Handhabungsvorrichtung in einer Darstellung von oben.
Fig. 8 zeigt eine weitere Handhabungsvorrichtung zur Durchführung des erfindungsgemäßen Verfahrens in einer Darstellung von oben.
Fig. 9 zeigt eine Handhabungsvorrichtung zur Durchführung des erfindungsgemäßen Verfahrens in einer seitlichen Darstellung.
Figuren 10 bis 13 zeigen schematisch eine weitere Ausführungsform eines zeitlichen Ablaufs eines erfindungsgemäßen Verfahrens zum Umgang mit in mindestens einer Reihe hintereinander bewegten Stückgütern durch eine entsprechende Handhabungsvorrichtung in einer Darstellung von oben.
Figuren 14 bis 18 zeigen schematisch eine weitere Ausführungsform eines zeitlichen Ablaufs eines erfindungsgemäßen Verfahrens zum Umgang mit in mindestens einer Reihe hintereinander bewegten Stückgütern durch eine entsprechende Handhabungsvorrichtung in einer Darstellung von oben.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

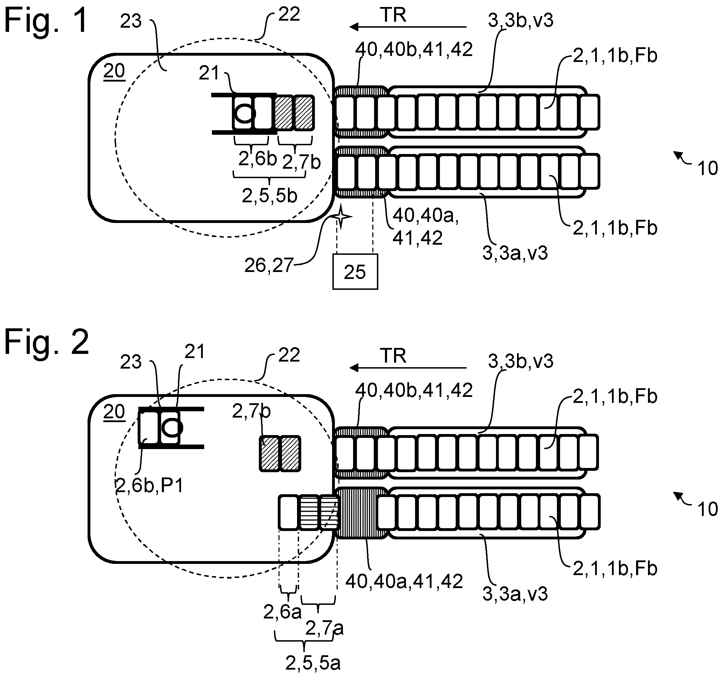

Die Figuren 1 bis 7 zeigen schematisch einen zeitlichen Ablauf eines erfindungsgemäßen Verfahrens zum Umgang mit in mindestens einer Reihe 1 hintereinander bewegten Stückgütern 2 durch eine entsprechende Handhabungsvorrichtung 10 in einer Darstellung von oben.

Die Handhabungsvorrichtung 10 umfasst mindestens eine erste Transporteinrichtung 3 zur Zuführung der Stückgüter 2. Gemäß der in den Figuren 1 bis 7 dargestellten Ausführungsform der Handhabungsvorrichtung 10 sind zwei parallel angeordnete Transporteinrichtungen 3, 3a, 3b vorgesehen, über welche unmittelbar aufeinanderfolgende Stückgüter 2 in zwei parallelen Reihen 1, 1a, 1b unterbrechungsfrei und/oder mit kontinuierlicher Transportgeschwindigkeit v3 in einer Transportrichtung TR als sogenannte geschlossene Formation F, Fa, Fb in Richtung eines Gruppiermoduls 20 der Handhabungsvorrichtung 10 zugeführt werden.

Die Transporteinrichtungen 3, 3a, 3b werden beispielsweise jeweils durch ein Förderband oder eine andere geeignete Fördereinrichtung gebildet, auf der die Stückgüter 2 vorzugsweise einreihig transportiert werden, wobei zwischen jeweils direkt aufeinander folgenden Stückgütern 2 keine bzw. nur eine geringfügige, gegebenenfalls prozessbedingte, Lücken oder Abstände bestehen.

Weiterhin umfasst die Handhabungsvorrichtung 10 ein erstes Handhabungsmodul in Form eines Gruppiermoduls 20. Das Gruppiermoduls 20 umfasst eine Horizontalfördereinrichtung 23, die wie die Transporteinrichtung 3 beispielsweise durch ein Endlosförderband gebildet wird. Vorzugsweise werden die Stückgüter 2 innerhalb des Gruppiermoduls 20 durch die Horizontalfördereinrichtung 23 kontinuierlich mit einer Geschwindigkeit bewegt, die der Transportgeschwindigkeit v3 der Transporteinrichtung(en) 3, 3a, 3b entspricht.

Das Gruppiermodul 20 ist mit einem bewegbaren, verschiebbaren und/oder rotierbaren Manipulator 21 ausgestattet. Der Manipulator 21 weist einen Erfassungsbereich 22 auf. Der Manipulator 21 ist dafür vorgesehen, mindestens ein Stückgut in seinem Erfassungsbereich 22 zu erfassen, von flankierenden Stückgütern 2 räumlich abzutrennen, in eine Zielposition und/oder Zielanordnung innerhalb des Erfassungsbereichs 22 zu verbringen und in dieser freizugeben.

Der Manipulator 21 ist zum klemmenden Entgegennehmen von Stückgütern 2 innerhalb seines Erfassungsbereichs 22 ausgebildet.

Bevor die Stückgüter 2 von der Transporteinrichtung 3, 3a, 3b in das Gruppiermodul 20 eintreten, werden Einheiten 5 umfassend jeweils mindestens zwei Stückgüter 2 gebildet. Die Einheiten 5 umfassen insbesondere eine Anzahl von Stückgütern 2, die durch den Manipulator 21 des Gruppiermoduls in zwei Verfahrensschritten oder Manipulationsschritten nacheinander erfasst und in unterschiedliche Zielpositionen und/oder Zielanordnungen innerhalb des Gruppiermoduls 20 verbracht werden.

Das von dem Manipulator 21 mindestens eine in einem ersten Manipulationsschritt erfasste Stückgut 2 der Einheit 5 oder die von dem Manipulator 21 in einem ersten Manipulationsschritt erfasste Gruppe aus mindestens zwei Stückgütern 2 der Einheit 5 wird dabei auch als erster Takt 6 bezeichnet. Das von dem Manipulator 21 mindestens eine in einem zweiten Manipulationsschritt erfasste Stückgut 2 der Einheit 5 oder die von dem Manipulator 21 in einem zweiten Manipulationsschritt erfasste Gruppe aus mindestens zwei Stückgütern 2 der Einheit 5 wird dabei auch als zweiter Takt 7 bezeichnet.

Die Einheiten 5 werden durch ein Taktbildungsmodul 40 von der geschlossenen Formation F, Fa, Fb abgetrennt. Insbesondere ist zwischen jeder der zuführenden Transporteinrichtungen 3, 3a, 3b und dem Gruppiermodul 20 jeweils ein Taktbildungsmodul 40a, 40b angeordnet. Innerhalb des Taktbildungsmoduls 40, 40a, 40b wird eine entsprechende Anzahl an Stückgütern 2, die jeweils eine Einheit 5 für mindestens zwei Manipulationsschritte bilden, räumlich von den nachlaufenden Stückgütern 2 der geschlossenen Formation F, Fa, Fb abgetrennt.

Vorzugsweise wird das Taktbildungsmodul 40, 40a, 40b jeweils durch eine Transporteinheit 41 gebildet. Dabei handelt es sich beispielsweise um ein sogenanntes Gruppierband 42. Dieses Gruppierband 42 bewegt sich in der Regel mit derselben Geschwindigkeit wie die zuführende Transporteinrichtung 3, 3a, 5b. Nachdem die Anzahl der die Einheit 5 bildenden Stückgüter 2 auf das Gruppierband 42 übergetreten ist, wird die Geschwindigkeit des Gruppierbands 42 kurzzeitig gegenüber der Transportgeschwindigkeit v3 der Transporteinrichtung 3, 3a, 3b erhöht, so dass die Stückgüter 2 der Einheit 5 von den nachlaufenden Stückgütern 2 der geschlossenen Formation F in Transportrichtung TR fluchtend räumlich von diesen abgetrennt werden.

Dabei kann vorgesehen sein, dass sich das in Transportrichtung TR letzte Stückgut 2 der zu bildenden Einheit 5 noch teilweise auf der Transporteinrichtung 3, 3a, 3b befindet. Durch die Geschwindigkeitserhöhung des Gruppierbandes 42 wird dieses letzte Stückgut 2 jedoch mit den anderen Stückgütern 2 der Einheit 5 gemeinsam beschleunigt.

Dem Taktbildungsmodul 40 (nur in Fig. 1 und nur für das Taktbildungsmodul 40a beispielhaft dargestellt) kann mindestens ein geeignetes Detektionsmittel 26, beispielsweise ein Sensor 27, insbesondere eine Kamera mit Bildauswertung o.ä. zugeordnet sein, der die Ausbildung der Einheiten 5 überwacht.

Insbesondere erkennt der Sensor 27, wenn eine Anzahl an die Einheit 5 bildenden Stückgüter 2 innerhalb des Taktbildungsmoduls 40a angeordnet ist und übermittelt die Information an eine Steuerungseinrichtung 25. Die Steuerungseinrichtung 25 aktiviert die Abtrennung der Einheiten 5 von den nachfolgenden Stückgütern 2 der Formation Fa durch eine entsprechende Regulierung und Ansteuerung der Transporteinheit 41, insbesondere durch kurzzeitige Erhöhung der Geschwindigkeit der Transporteinheit 41.

Wie in Fig. 1 dargestellt, wird im Taktbildungsmodul 40a aus der Formation Fb vermittels des Gruppierbandes 42 eine Einheit 5, 5b umfassend vier Stückgüter 2 abgetrennt, wobei die beiden in Transportrichtung TR zuvorderst angeordneten Stückgüter 2 der Einheit 5b den ersten Takt 6b bilden und wobei die beiden in Transportrichtung TR nachlaufenden Stückgüter 2 der Einheit 5b den zweiten Takt 7b bilden. Der Manipulator 21 erfasst in einem ersten Manipulationsschritt die beiden zuvorderst angeordneten Stückgüter 2 der Einheit 5b und verbringt diesen ersten Takt 6b vermittels einer Drehung um 180 Grad in eine erste Zielposition und/oder Zielanordnung P1 (Fig. 2).

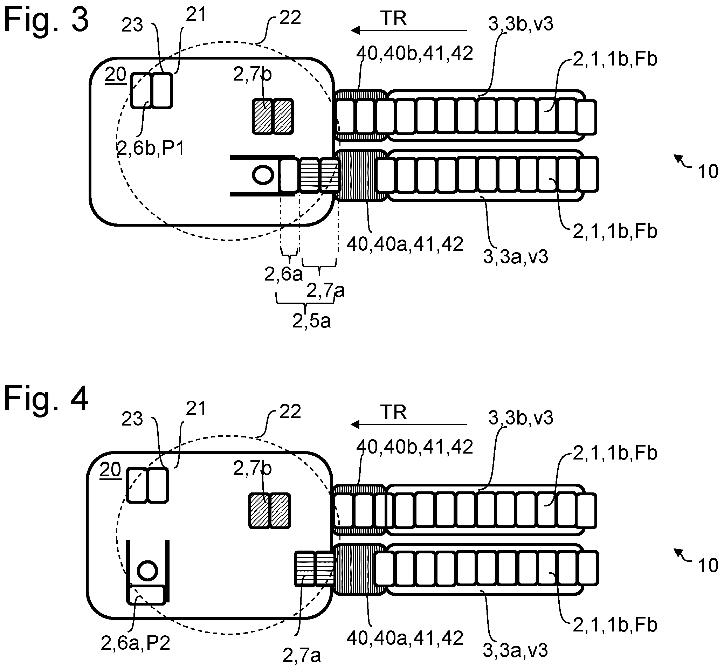

In der Zwischenzeit wird im Taktbildungsmodul 40a aus der Formation Fa vermittels des Gruppierbandes 42 eine Einheit 5, 5a umfassend drei Stückgüter 2 abgetrennt, wobei das in Transportrichtung TR zuvorderst angeordnete Stückgut 2 den ersten Takt 6a der Einheit 5a bildet und wobei die beiden in Transportrichtung TR nachlaufenden Stückgüter 2 den zweiten Takt 7a der Einheit 5a bilden. Der Manipulator 21 erfasst in einem zweiten Manipulationsschritt das vorderste Stückgut 2 der Einheit 5b (Fig. 3) und verbringt diesen ersten Takt 6a vermittels einer Drehung um 90 Grad in eine zweite Zielposition und/oder Zielanordnung P2 (Fig. 4).

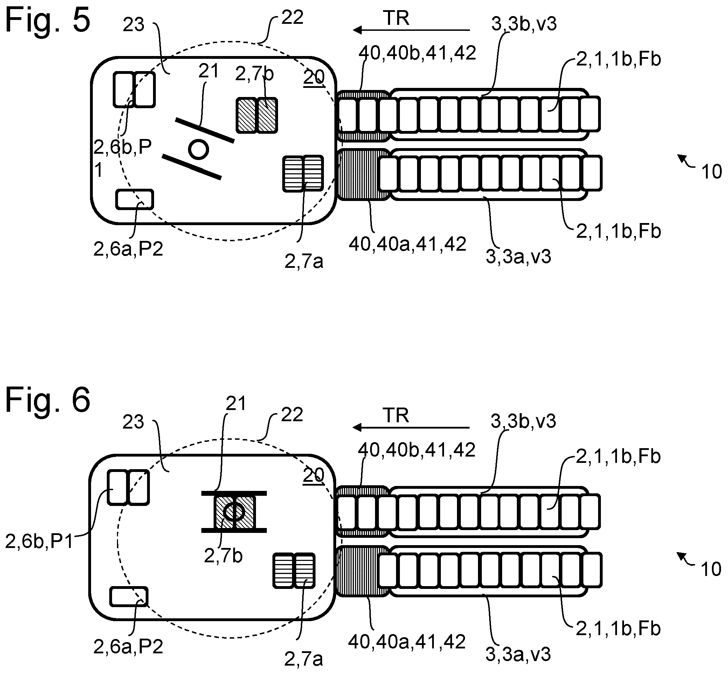

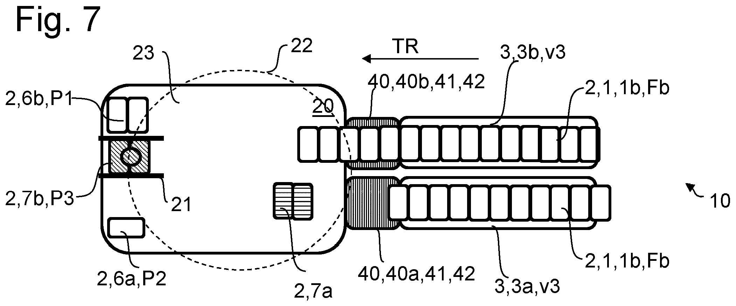

In einem nachfolgenden dritten Manipulationsschritt erfasst der Manipulator nunmehr die Stückgüter 2 des zweiten Taktes 7b der gemäß Fig. 1 gebildeten Einheit 5b und verbringt diese durch Verschieben in Transportrichtung TR gekoppelt mit einer seitlichen Bewegungskomponente in eine dritte Zielposition P3 (Figuren 6 und 7). In einem nachfolgenden vierten Verfahrensschritt (nicht dargestellt), werden die Stückgüter 2 des zweiten Taktes 7a der gemäß Fig. 2 gebildeten Einheit 5a erfasst und in eine vierte Zielposition und/oder Zielanordnung verbracht.

Das Ausführungsbeispiel verdeutlicht, dass die zwei zeitlich aufeinanderfolgenden Verfahrensschritt zur Manipulation der Stückgüter 2 einer ersten Einheit 5, 5b nicht direkt aufeinander folgen müssen, sondern dass zwischenzeitlich ein weiterer Manipulationsschritt durchgeführt werden kann, bei dem Stückgüter 2 einer zweiten Einheit 5, 5a von dem Manipulator 21 gehandhabt werden.

Bei der Handhabung der Takte 6a, 6b, 7a, 7b durch den Manipulator 21 kann beispielsweise eine Drehbewegung des Manipulators 21 um eine vorzugsweise in etwa vertikale Achse erfolgen, so dass der vom Manipulator 21 erfasste Takt 6a, 6b, 7a, 7b an Stückgütern 2 entsprechend gedreht wird. Gemäß Fig. 4 erfolgt insbesondere eine Drehung um 90 Grad, so dass das in der zweiten Zielposition und/oder Zielanordnung P2 freigegebene Stückgut 2 des ersten Taktes 6a der Einheit 5a eine um 90 Grad gedrehte Ausrichtung gegenüber den nachfolgenden Stückgütern 2 der geschlossenen Formation Fa aufweist.

Alternativ kann beispielsweise ein in Transportrichtung TR fluchtendes oder seitliches Verschieben des durch den Manipulator 21 erfassten Taktes 6a, 6b, 7a, 7b an Stückgütern 2 vorgesehen sein, Das seitliche Verschieben erfolgt vorzugsweise mit einer Bewegungskomponente in Transportrichtung TR. Bei einem Verschieben behalten die in der jeweiligen Zielposition und/oder Zielanordnung vom Manipulator 21 freigegebenen Stückgüter 2 zwar dieselbe Ausrichtung wie die Stückgüter 2 der geschlossenen Formation F bei, bewegen sich jedoch nicht mehr fluchtend zu den nachfolgenden Stückgütern 2 der geschlossenen Formation F. Dies wird beispielsweise durch die Anordnung der Stückgüter 2 des zweiten Taktes 7b der Einheit 5b in der dritten Zielposition und/oder Zielanordnung P3 gemäß Fig. 7 dargestellt.

Während der Positionierung der vom Manipulator 21 erfassten Takte 6a, 6b, 7a, 7b werden die zuführende Transporteinrichtung 3, 3a, 3b, das jeweilige Gruppierband 42 und die Horizontalfördereinrichtung 23 weiterhin konstant betrieben, wobei das Gruppierband zur Ausbildung weiterer Einheiten 5 jeweils entsprechend kurzzeitig beschleunigt werden kann. Die Geschwindigkeit v3 ist dabei so gewählt, dass der Manipulator 21 innerhalb des ihm zur Verfügung stehenden Arbeitsbereichs, insbesondere innerhalb seines Erfassungsbereichs 22, ausreichend Zeit hat, um die Stückgüter 2 zu manipulieren und/oder handzuhaben und zu verschieben. Bevorzugt besteht der erste Manipulator 21 aus einem Deltakinematik- Roboter, einem Tripod o.ä., um hoch dynamische Verschiebebewegungen zu realisieren und möglichst schnelle Taktzeiten zu ermöglichen.

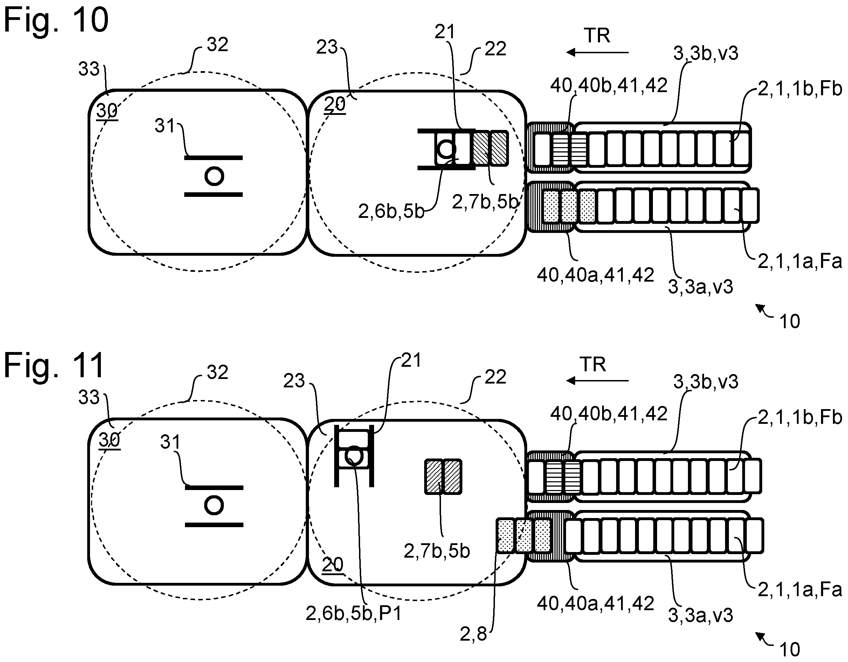

Alternativ könnte vorgesehen sein, dass der Manipulator 21 beispielsweise nur die Stückgüter 2 eines der Takte 6a, 6b, 7a, 7b einer Einheit 5 erfasst und handhabt, während die Stückgüter 2 des jeweils anderen Taktes das Gruppiermodul 20 in Tranprotrichtung ohne weitere Manipulation durchlaufen. Dies kann beispielsweise für Ausführungsformen mit zwei nacheinander angeordneten Gruppiermodulen 20, 30 (vergleiche Figuren 10 bis 18) vorteilhaft sein, oder aber wenn die Stückgüter 2 des jeweils nicht manipulierten Taktes bereits relativ innerhalb des Gruppiermoduls 20 in geeigneter Weise für die nachfolgende Handhabung durch weitere Verarbeitungsmodule (nicht dargestellt) positioniert sind.

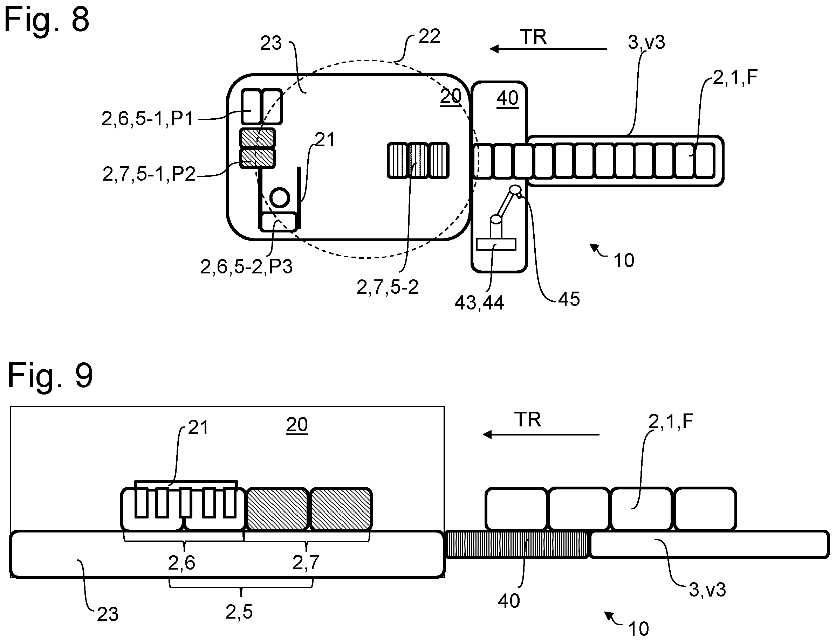

Die Fig. 8 zeigt eine weitere Handhabungsvorrichtung 10 zur Durchführung des erfindungsgemäßen Verfahrens in einer Darstellung von oben. Hierbei werden die Stückgüter 2 in einer Reihe 1 als geschlossene Formation F dem Taktbildungsmodul 40 zugeführt. Das Taktbildungsmodul 40 umfasst in diesem Fall einen taktbildenden Manipulator 43, der beispielsweise durch einen Roboter 44 o.ä. gebildet wird und eine Greifer 45 aufweist.

Der taktbildende Manipulator 43 erfasst eine der zu bildenden Einheit 5 entsprechende Anzahl von Stückgütern 2 und trennt diese von der geschlossenen Formation F ab, insbesondere indem der taktbildende Manipulator 43 in Transportrichtung TR eine erhöhte Geschwindigkeitskomponente auf die erfassten Stückgüter 2 der zu bildenden Einheit 5 aufbringt. In diesem Fall wird zuerst eine Einheit 5-1 aus vier Stückgütern 2 von der Formation F abgetrennt, wobei jeweils zwei Stückgüter 2 den ersten Takt 6 und den zweiten Takt 7 der Einheit 5-1 bilden. Der Manipulator 21 verbringt in einem ersten Manipulationsschritt die beiden Stückgüter 2 des ersten Taktes 6 der Einheit 5-1 durch seitliches Verschieben in eine erste Zielposition und/oder Zielanordnung P1.

Anschließend verbringt der Manipulator 21 in einem zweiten Manipulationsschritt die beiden Stückgüter 2 des zweiten Taktes 7 der Einheit 5-1 unter Drehung um 90 Grad in eine zweite Zielposition und/oder Zielanordnung P2. Parallel dazu wird innerhalb des Taktbildungsmoduls 40 eine weitere Einheit 5-2 aus vier Stückgütern 2 durch den taktbildenden Manipulator 43 von der Formation F räumlich abgetrennt. Hierbei ist vorgesehen, dass der erste Takt 6 der Einheit 5-2 ein Stückgut 2 umfasst und dass der zweite Takt 7 der Einheit 5-2 drei Stückgüter umfasst.

In einem dritten Manipulationsschritt verbringt der Manipulator 21 das den ersten Takt 6 der Einheit 5-2 bildende eine Stückgut 2 unter Drehung um 90 Grad in eine dritte Zielposition und/oder Zielanordnung P3, um in einem nachfolgenden vierten Manipulationsschritt den zweiten Takt 7 der Einheit 5-2 umfassend drei Stückgüter 2 entsprechend zu bearbeiten (nicht dargestellt).

Die Fig. 9 zeigt eine Handhabungsvorrichtung 10 zur Durchführung des erfindungsgemäßen Verfahrens in einer seitlichen Darstellung. Hierbei ist ein Verfahrensschritt dargestellt, bei dem durch das Taktbildungsmodul 40 eine Einheit 5 aus vier Stückgütern 2 gebildet worden ist. Die Einheit 5 umfasst dabei zwei Takte 6 und 7 umfassend jeweils zwei Stückgüter 2. In Fig. 9 ist das Erfassen der zwei Stückgüter 2 des ersten Taktes 6 durch den Manipulator 21 dargestellt.

Die Ausführungsbeispiele der Figuren 1 bis 9 verdeutlichen, dass die gebildeten Einheiten 5 jeweils eine unterschiedliche Anzahl an Stückgütern 2 umfassen können. Dies ist insbesondere abhängig von der benötigten Größe der Takte 6, 7 für die weitere Verarbeitung. Weiterhin wird deutlich, dass auch bei gleicher Anzahl an Stückgütern 2 innerhalb mehrerer Einheiten 5 die Anzahl der nacheinander von der Einheit 5 abgegriffenen Stückgüter 2, die jeweils die Takte 6, 7 bilden, in Abhängigkeit von den Anforderungen der nachfolgenden Verarbeitung unterschiedlich sein kann.

So kann eine Einheit 5 umfassend vier Stückgüter 2 beispielsweise aus zwei Takten 6, 7 jeweils umfassend zwei Stückgüter 1 bestehen. Andererseits kann von einer Einheit 58 umfassend vier Stückgüter 2 auch ein erster Takt 6 umfassend ein Stückgut 2 und ein zweiter Takt 7 umfassend drei Stückgüter 2 abgegriffen werden usw.

Auch wenn im Zusammenhang mit den Figuren 1 bis 9 immer beschrieben worden ist, dass zuerst die Stückgüter 2 des in Transportrichtung TR vorauseilenden ersten Taktes 6 der Einheit 5 durch den Manipulator 21 erfasst und gehandhabt werden, so kann alternativ vorgesehen sein, dass mindestens eines der in Transportrichtung TR nachlaufenden Stückgüter 2 einer Einheit 5 als erster Takt 6 erfasst und in eine entsprechende Zielposition und/oder Zielanordnung verbracht wird.

Weiterhin kann vorgesehen sein, dass eine Einheit 5 aus mehr als zwei Takten 6, 7 gebildet wird. Umfasst eine Einheit 5 beispielsweise eine Anzahl von Stückgütern für drei Takte, so kann eine Ausführungsform vorsehen, dass mindestens ein mittiges Stückgut 2 der Einheit 5 als erster Takt 6 erfasst und von den restlichen Stückgütern 2 der Einheit räumlich abgetrennt wird.

Die Figuren 10 bis 13 zeigen schematisch eine weitere Ausführungsform eines zeitlichen Ablaufs eines erfindungsgemäßen Verfahrens zum Umgang mit in mindestens einer Reihe 1 hintereinander bewegten Stückgütern 2 durch eine entsprechende Handhabungsvorrichtung 10 in einer Darstellung von oben. Analog zu den Figuren 1 bis 7 werden die Stückgüter 2 bei der hier dargestellten Ausführungsform in zwei parallelen Reihen 1a, 1b jeweils in lückenloser Formation Fa, Fb einem ersten Handhabungsmodul in Form eines ersten Gruppiermoduls 20 zugeführt. Vor dem Gruppiermodul 20 werden jeweils Einheiten 5 von Stückgütern 2 zur nachfolgenden Bearbeitung innerhalb des Gruppiermoduls 20 abgetrennt.

Weiterhin ist vorgesehen, dass dem ersten Gruppiermodul 20 in Transportrichtung TR ein zweites Handhabungsmodul in Form eines zweiten Gruppiermoduls 30 nachgeordnet ist, welches einen zweiten Manipulator 31 und eine zweite Horizontalfördereinrichtung 33 umfasst, wobei der zweite Manipulator 31 einen zweiten Erfassungsbereich 32 aufweist, innerhalb dessen er Stückgüter 2 erfassen und in eine geeignete Zielposition und/oder Zielanordnung verbringen kann.

Bei dieser Ausführungsform ist beispielsweise vorgesehen, dass von der Formation Fb eine Einheit 5b umfassend vier Stückgüter 2 abgetrennt wird. Die Einheit 5b wird weiter in Transportrichtung TR bewegt und gelangt in den ersten Erfassungsbereich 22 des ersten Manipulators 21 (Fig. 10). In einem ersten Manipulationsschritt trennt der Manipulator 21 von der Einheit 5b einen ersten Takt 6b umfassend zwei Stückgüter 2 räumlich von den restlichen Stückgütern 2 der Einheit 5b ab und überführt diesen ersten Takt 6b unter Drehung um 90 Grad in eine erste Zielposition und/ oder Zielanordnung P1 (Fig. 11).

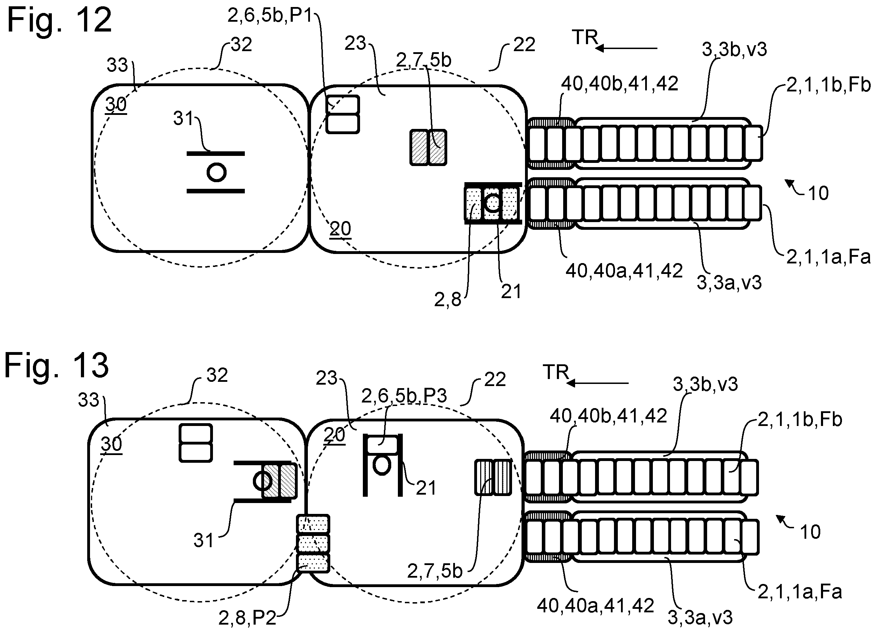

Währenddessen wird innerhalb des Taktbildungsmoduls 40a eine Einzeltakt-Einheit 8 umfassend drei Stückgüter 2 von der Formation Fa räumlich abgetrennt und in das erste Gruppiermodul 20 überführt. In einem zweiten Manipulationsschritt greift der Manipulator 21 die drei Stückgüter 2 der Einzeltakt-Einheit 8 gemeinsam (Fig. 12) und überführt diese in eine zweite Zielposition und/oder Zielanordnung P2 (Fig. 13).

Zwischenzeitlich wird von der Formation Fb eine weitere Einheit 5b umfassend drei Stückgüter 2 abgetrennt, von denen der Manipulator 21 zuerst ein Stückgut 2 als ersten Takt 6 abgreift und unter Drehung um 90 Grad in eine dritte Zielposition und/oder Zielanordnung P3 verbringt (Fig. 13).

Während die oben beschriebenen Manipulationsschritte innerhalb des ersten Gruppiermoduls 20 stattfinden, werden die Stückgüter 2 der jeweils zweiten Takte 7b, 7 der gebildeten Einheiten 5b innerhalb des ersten Gruppiermoduls 20 über die erste Horizontalfördereinrichtung 23 kontinuierlich und fluchtend zur Formation Fb in Transportrichtung TR bewegt. Nach Übertritt der Stückgüter 2 der jeweils zweiten Takte 7b, 7 der gebildeten Einheiten 5b in das zweite Gruppiermodul 30 werden diese durch den zweiten Manipulator 31 innerhalb des zweiten Erfassungsbereichs 32 klemmend und/oder kraftschlüssig und/oder formschlüssig erfasst (Fig. 13) und durch den zweiten Manipulator 31 innerhalb des zweiten Gruppiermoduls 30 in eine entsprechende Zielposition und/oder Zielanordnung verbracht (nicht dargestellt).

Einzelne Verfahrensschritte können auch vorsehen, dass die Stückgüter 2 beider eine Einheit 5 bildenden Takte 6 und 7 im ersten Gruppiermodul 20 durch den ersten Manipulator 21 erfasst und gehandhabt werden. Alternativ können einzelne Verfahrensschritte auch vorsehen, dass die Stückgüter 2 beider eine Einheit 5 bildenden Takte 6 und 7 erst im zweiten Gruppiermodul 30 durch den zweiten Manipulator 31 erfasst und gehandhabt werden.

Im Zusammenhang mit allen vorbeschriebenen Manipulationsschritten ist vorgesehen, dass die in eine Zielposition und/oder Zielanordnung verbrachten Stückgüter 2 innerhalb des ersten Gruppiermoduls 20 und/oder innerhalb des zweiten Gruppiermoduls 30 - gegebenenfalls nach der Freigabe durch den jeweiligen Manipulator 21, 31 - weiter kontinuierlich in Transportrichtung TR bewegt werden. Insbesondere erfolgt die Bewegung über die erste Horizontalfördereinrichtung 23 und/oder die zweite Horizontalfördereinrichtung 33 mit einer Fördergeschwindigkeit, die der Transportgeschwindigkeit v3 der Stückgüter 2 der geschlossenen Formation F, Fa, Fb entspricht. Somit wird die relative Position der in eine Zielposition und/oder Zielanordnung verbrachten Stückgüter 2 gegenüber den Stückgütern 2 der Formation F, Fa, Fb beibehalten.

Die in den Figuren 10 bis 13 dargestellte Ausführungsform verdeutlicht insbesondere, dass durch das Taktbildungsmodul 40 für einzelne Verfahrensschritte auch Einzeltakt-Einheiten 8 gebildet werden können, die genau die Anzahl an Stückgütern 2 umfassen, die vom ersten Manipulator 21 und/oder vom zweiten Manipulator 31 in einem einzigen Verfahrensschritt gemeinsam erfasst und gehandhabt werden. Auch wenn im Zusammenhang mit den Figuren immer nur die Abtrennung von Einheiten 5 umfassend zwei Takte 6 und 7 beschrieben worden ist, können natürlich auch Einheiten 5 umfassend mehr als zwei Takte 6, 7 an Stückgütern 2 entsprechend von der Formation F, Fa, Fb abgetrennt werden, beispielsweise Einheiten 5 umfassend drei in zeitlich nacheinander ablaufenden Verfahrensschritten oder Manipulationsschritten zu bearbeitende Takte an Stückgütern 2.

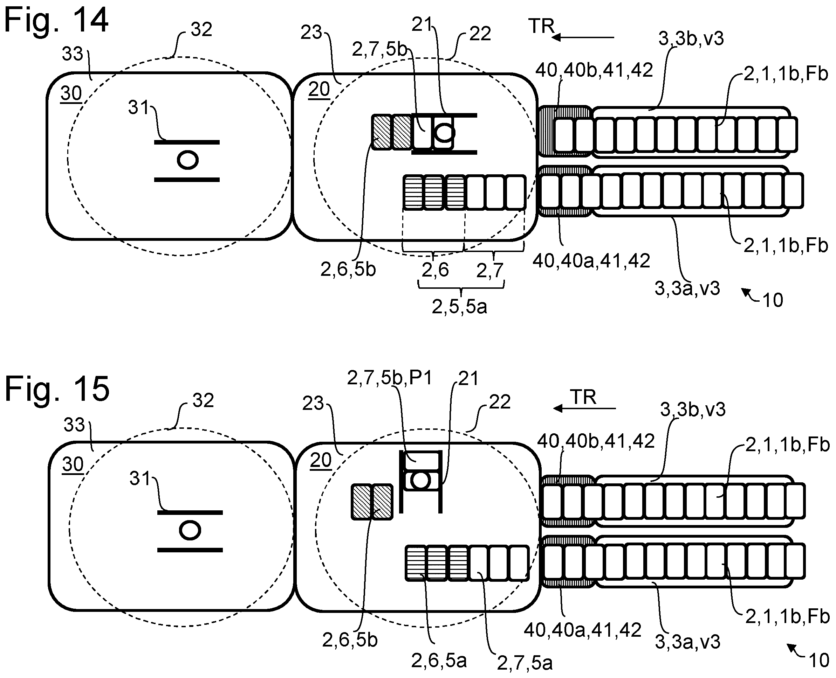

Die Figuren 14 bis 18 zeigen schematisch eine weitere Ausführungsform eines zeitlichen Ablaufs eines erfindungsgemäßen Verfahrens zum Umgang mit in mindestens einer Reihe 1 hintereinander bewegten Stückgütern 2 durch eine entsprechende Handhabungsvorrichtung 10 in einer Darstellung von oben. Die Handhabungsvorrichtung 10 entspricht der in den Figuren 10 bis 13 vorbeschriebenen Ausführungsform, auf deren Beschreibung hiermit verwiesen wird.

Vermittels des Taktbildungsmoduls 40b wird von der Formation Fb eine Einheit 5b umfassend vier Stückgüter 2 abgetrennt, wobei zwei Stückgüter 2 den ersten Takt 6 der Einheit 5b und die restlichen zwei Stückgüter 2 den zweiten Takt 7 der Einheit 5b bilden. Durch das Taktbildungsmodul 40a wird eine Einheit 5a umfassend sechs Stückgüter 2 von der Formation Fa abgetrennt (Fig. 14).

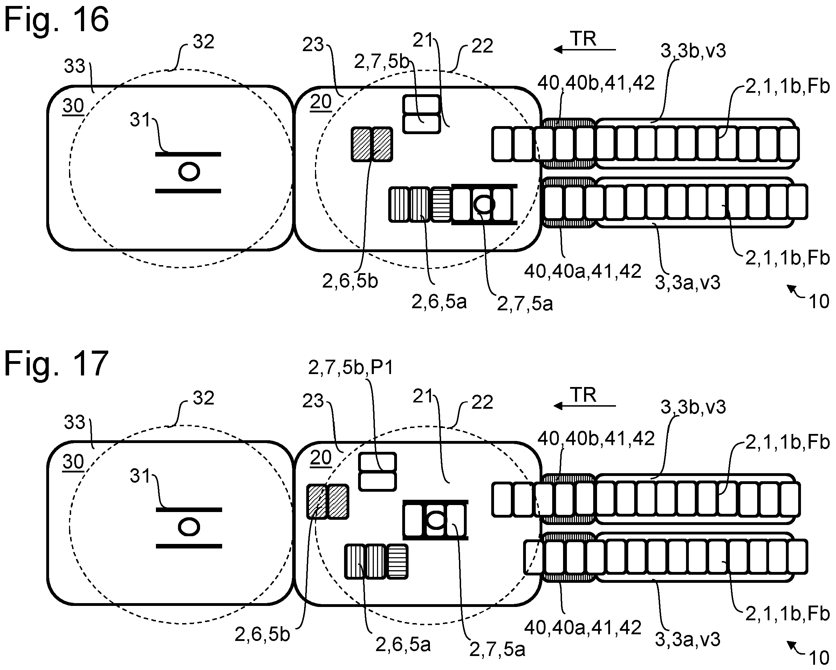

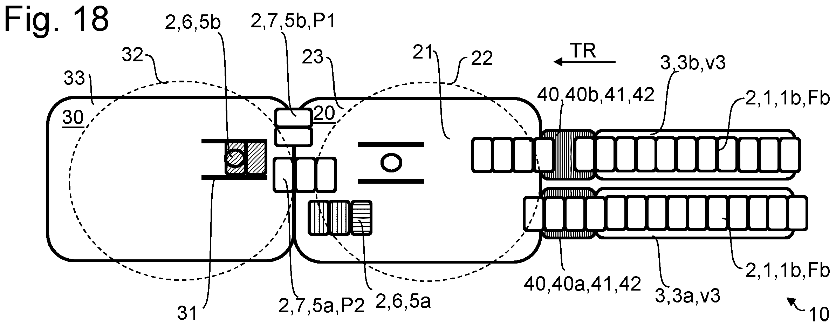

Der erste Manipulator 21 erfasst die beiden nachlaufenden Stückgüter 2 des zweiten Taktes 7 der Einheit 5b (Fig. 14) und verbringt diese unter Drehung um 90 Grad oder unter Drehung um 270 Grad in eine erste Zielposition und/oder Zielanordnung P1 (Fig. 15). Anschließend erfasst der erste Manipulator 21 die drei nachlaufenden Stückgüter 2 des zweiten Taktes 7 der Einheit 5a (Fig. 16) und verbringt diese unter Verschieben in Transportrichtung TR mit einer zusätzlichen seitlichen Bewegungskomponente in eine zweite Zielposition und/oder Zielanordnung P2 (Figuren 17 und 18).

Währenddessen werden die Stückgüter 2 der jeweils ersten Takte 6 der gebildeten Einheiten 5b, 5a innerhalb des ersten Gruppiermoduls 20 über die erste Horizontalfördereinrichtung 23 kontinuierlich und fluchtend zur jeweiligen Formation Fb, Fa in Transportrichtung TR bewegt. Nach Übertritt der Stückgüter 2 der jeweils ersten Takte 6 der gebildeten Einheiten 5b, 5a in das zweite Gruppiermodul 30 werden diese durch den zweiten Manipulator 31 innerhalb des zweiten Erfassungsbereichs 32 klemmend und/oder kraftschlüssig und/oder formschlüssig erfasst und durch den zweiten Manipulator 31 innerhalb des zweiten Gruppiermoduls 30 in eine entsprechende Zielposition und/oder Zielanordnung verbracht (nicht dargestellt). Insbesondere zeigt Fig. 18 das Erfassen der beiden Stückgüter 2 des ersten Takes 6 der von der Formation Fb abgetrennten Einheit 5b.

Bei allen vorbeschriebenen Ausführungsformen wird vorzugsweise innerhalb der Handhabungsvorrichtung, insbesondere innerhalb des mindestens einen Gruppiermoduls 20, 30 aus einer Mehrzahl von Stückgütern 2 mindestens eine palettierfähige Lagenanordnung oder Stückgutlage zusammengestellt. Das Verfahren ist sowohl bei der Ausführungsform mit nur einem Gruppiermodul 20 gemäß Figuren 1 bis 7 sowie 8 und 9, als auch bei Ausführungsformen mit zwei nacheinander angeordneten Gruppiermodulen 20, 30 vorteilhaft anwendbar. Gemäß einer bevorzugten Ausführungsform wird aus einer Mehrzahl von Stückgütern 2 innerhalb des ersten Erfassungsbereichs 22 des ersten Gruppiermoduls 20 und/oder innerhalb des zweiten Erfassungsbereichs 32 des zweiten Gruppiermoduls 30 mindestens eine palettierfähige Lagenanordnung oder Stückgutlage zusammengestellt.

Vorzugsweise ist vorgesehen, dass der erste Manipulator 21 aus einer Mehrzahl von Stückgütern 2 innerhalb des ersten Erfassungsbereichs 22 mindestens eine erste palettierfähige Lagenanordnung oder Stückgutlage zusammengestellt. Diese Stückgutlage kann noch Lücken zwischen den Stückgütern aufweisen. Die kompakte palettierfähige Lage wird beispielsweise nach Durchlaufen des zweiten Gruppiermoduls 30 in einem nachfolgenden Palettierungsmodul durch Zusammenschieben der Stückgüter 2 vor der anschließenden Palettierung fertiggestellt.

Weiterhin wird bei dieser Ausführungsform durch den zweiten Manipulator 31 aus einer Mehrzahl von Stückgütern 2 innerhalb des zweiten Erfassungsbereichs 32 mindestens eine zweite palettierfähige Lagenanordnung oder Stückgutlage zusammengestellt und dem nachfolgenden Palettierungsmodul zugeführt. Eine alternative Ausführungsform kann vorsehen, dass die Anordnung von Stückgütern 2 durch den ersten Manipulator 21 im ersten Gruppiermodul 20 und den zweiten Manipulator 31 im zweiten Gruppiermodul 30 zur Ausbildung einer gemeinsamen Stückgutlage dient, die anschließend dem Palettierungsmodul zur weiteren Verarbeitung zugeführt wird.

Auch wenn im Zusammenhang mit der Figurenbeschreibung jeweils Gruppiermodule 20, 30 zur Herstellung von palettierfähigen Stückgutlagen beschrieben worden sind, so können stattdessen auch Drehsysteme und/oder Verteilsysteme in entsprechender Weise bedient werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, sofern dabei der Schutzbereich der nachstehenden Ansprüche nicht verlassen wird.

### Bezugszeichenliste

- 1,1a,1b: Reihe
- 2: Stückgut
- 3,3a,3b: Transporteinrichtung
- 5,5a,5b,5-1,5-2: Einheit
- 6,6a,6b: erster Takt
- 7,7a,7b: zweiter Takt
- 8: Einzeltakt-Einheit
- 10: Handhabungsvorrichtung
- 20: (erstes) Gruppiermodul
- 21: (erster) Manipulator
- 22: (erster) Erfassungsbereich
- 23: (erste) Horizontalfördereinrichtung#
- 25: Steuerungseinrichtung
- 26: Detektionsmittel
- 27: Sensor
- 30: zweites Gruppiermodul
- 31: zweiter Manipulator
- 32: zweiter Erfassungsbereich
- 33: zweite Horizontalfördereinrichtung
- 40,40a,40b: Taktbildungsmodul
- 41: Transporteinheit
- 42: Gruppierband
- 43: taktbildender Manipulator
- 44: Roboter
- 45: Greifer
- F,Fa,Fb: geschlossene Formation
- P: Zielposition und/oder Zielanordnung
- P1: erste Zielposition und/oder Zielanordnung
- P2: zweite Zielposition und/oder Zielanordnung
- P3: dritte Zielposition und/oder Zielanordnung
- TR: Transportrichtung
- v3: Transportgeschwindigkeit

## Patentansprüche

1. Verfahren zum Umgang mit in mindestens einer Reihe (1) hintereinander bewegten Stückgütern (2), wobei
- die Stückgüter (2) ohne Beabstandung unmittelbar aufeinanderfolgend als geschlossene Formation (F) in einer Transportrichtung (TR) mindestens einem ersten Handhabungsmodul (20) mit einem ersten Manipulator (21) zur Handhabung der Stückgüter (2) in einem dem ersten Manipulator (21) zugeordneten ersten Erfassungsbereich (22) zugeführt werden;
- wobei vor dem Eintritt der Stückgüter (2) in das mindestens eine erste Handhabungsmodul (20) Einheiten (5) aus mindestens zwei hintereinander bewegten Stückgütern (2) gebildet werden;
- wobei die Einheiten (5) vermittels eines vor dem ersten Handhabungsmodul (20) angeordneten Taktbildungsmodul (40) gebildet werden,
- wobei innerhalb des Taktbildungsmodul (40) eine entsprechende Anzahl an die Einheit (5) bildenden Stückgütern (2) räumlich von den nachlaufenden Stückgütern (2) der geschlossenen Formation (F) abgetrennt wird,
- wobei ein erster Teil (6) der Stückgüter (2) der Einheit (5) in eine erste Zielposition und/oder Zielanordnung (P1) innerhalb des ersten Handhabungsmoduls (20) verbracht wird,
- wobei das mindestens eine innerhalb des ersten Handhabungsmoduls (20) in die erste Zielposition und/oder Zielanordnung (P1) zu verbringende Stückgut (2) durch den ersten Manipulator (21) des ersten Handhabungsmoduls (20) klemmend erfasst und von den restlichen Stückgütern (2) der Einheit (5) räumlich abgetrennt wird,
- wobei ein zweiter Teil (7) der Stückgüter (2) der Einheit (5) durch das mindestens eine erste Handhabungsmodul (20) hindurch transportiert wird, ohne dabei innerhalb des ersten Handhabungsmoduls (20) manipuliert und/oder gehandhabt zu werden; **dadurch gekennzeichnet, dass**
- der zweite Teil (7) der Stückgüter (2) der Einheit (5) durch das mindestens eine erste Handhabungsmodul (20) hindurch zu einem nachgeordneten zweiten Handhabungsmodul (30) transportiert wird,
- wobei der zweite Teil (7) der Stückgüter (2) der Einheit (5) innerhalb des zweiten Handhabungsmoduls (30) in eine zweite Zielposition und/oder Zielanordnung (P2) verbracht wird,
- wobei das mindestens eine innerhalb des zweiten Handhabungsmoduls (30) in die zweite Zielposition und/oder Zielanordnung (P2) zu verbringende Stückgut (2) durch einen zweiten Manipulator (31) des zweiten Handhabungsmoduls (30) klemmend erfasst wird.

2. Verfahren nach Anspruch 1, wobei jeweils eine Einheit (5) aus einer definierten Anzahl an Stückgütern (2) gebildet wird, wobei die Stückgüter (2) der Einheit (5) in mindestens zwei voneinander beabstandete Zielpositionen und/oder Zielanordnungen verbracht werden, insbesondere wobei die Anzahl der Stückgüter (2) der Einheit (5) der Anzahl an Stückgütern (2) für genau zwei Verfahrensschritte entspricht.

3. Verfahren nach Anspruch 1 oder 2, wobei die gebildete Einheit (5) aus zwei hintereinander bewegten Stückgütern (2) besteht, wobei eines der Stückgüter (2) der Einheit (5) in die erste Zielposition und/oder Zielanordnung (P1) innerhalb des ersten Handhabungsmoduls (20) verbracht wird und wobei das andere Stückgut (2) der Einheit (5) in die zweite Zielposition und/oder Zielanordnung (P2) innerhalb des zweiten Handhabungsmoduls (30) verbracht wird.

4. Verfahren nach einem der voranstehenden Ansprüche, wobei das Taktbildungsmodul (40) eine vor dem ersten Handhabungsmodul (20) angeordneten Transporteinheit (41) umfasst, wobei die Transporteinheit (41) zur Bildung der Einheiten (5) zumindest kurzzeitig mit einer gegenüber einer Transportgeschwindigkeit (v3) der geschlossenen Formation (F) erhöhten Geschwindigkeit bewegt wird oder wobei das Taktbildungsmodul (40) einen taktbildenden Manipulator (43) umfasst, wobei der taktbildende Manipulator (43) eine entsprechende Anzahl an die Einheit (5) bildenden Stückgütern (2) erfasst und mit einer Bewegungskomponente in Transportrichtung (TR) beaufschlagt.

5. Verfahren nach einem der voranstehenden Ansprüche, wobei mindestens eines der in Transportrichtung (TR) vorauseilenden Stückgüter (2) der Einheit (5) zuerst erfasst und innerhalb des mindestens einen ersten Handhabungsmoduls (20) in die erste Zielposition und/oder Zielanordnung (P1) verbracht wird oder wobei mindestens eines der in Transportrichtung (TR) nachlaufenden Stückgüter (2) der Einheit (5) zuerst erfasst und innerhalb des mindestens einen ersten Handhabungsmoduls (20) in die erste Zielposition und/oder Zielanordnung (P1) verbracht wird oder wobei mindestens ein mittiges Stückgut (2) der Einheit (5) zuerst erfasst und innerhalb des mindestens einen ersten Handhabungsmoduls (20) in die erste Zielposition und/oder Zielanordnung (P1) verbracht wird.

6. Verfahren nach einem der voranstehenden Ansprüche, wobei die in eine Zielposition und/oder Zielanordnung verbrachten Stückgüter (2) innerhalb des ersten Handhabungsmoduls (20) und/oder innerhalb des zweiten Handhabungsmoduls (30) weiter kontinuierlich in Transportrichtung (TR) bewegt werden.

7. Verfahren nach Anspruch 6, wobei die Stückgüter (2) mit einer Fördergeschwindigkeit bewegt werden, die der Transportgeschwindigkeit (v3) der Stückgüter (2) der geschlossenen Formation (F) entspricht.

8. Verfahren nach einem der voranstehenden Ansprüche, wobei aus einer Mehrzahl von Stückgütern (2) innerhalb des mindestens einen ersten Handhabungsmoduls (20) und/oder innerhalb des zweiten Handhabungsmoduls (30) mindestens eine palettierfähige Lagenanordnung oder Stückgutlage zusammengestellt wird.

9. Vorrichtung (10) umfassend
- wenigstens eine Transporteinrichtung (3), über welche unmittelbar aufeinanderfolgende Stückgüter (2) der Reihe (1) ohne Beabstandung als geschlossene Formation (F) in einer Transportrichtung (TR) zuführbar sind;
- ein Taktbildungsmodul (40) zur Ausbildung von Einheiten (5) aus mindestens zwei hintereinander bewegten Stückgütern (2);
- mindestens ein erstes Handhabungsmodul (20) mit einem ersten Manipulator (21) zur Handhabung der Stückgüter (2);
- wobei ein erster Teil (6) der Stückgüter (2) der Einheit (5) in eine erste Zielposition und/oder Zielanordnung (P1) innerhalb des ersten Handhabungsmoduls (20) verbringbar ist und
- wobei der erste Manipulator (21) zum klemmenden Entgegennehmen mindestens eines Stückgutes (2) aus der Einheit (5) von Stückgütern (2) ausgebildet ist, sowie zum räumlichen Abtrennen des mindestens einen Stückgutes (2) von dem mindestens einen weiteren Stückgut (2) der Einheit (5) und Überführen des mindestens einen erfassten Stückgutes (2) in eine erste Zielposition und/oder Zielanordnung (P1) innerhalb des ersten Handhabungsmoduls (20), **dadurch gekennzeichnet, dass**
- die Vorrichtung (10) zur Durchführung eines Verfahrens zum Umgang mit in mindestens einer Reihe (1) hintereinander bewegten Stückgütern (2) nach einem der Ansprüche 1 bis 8 eingerichtet ist,
- wobei ein zweiter Teil (7) der Stückgüter (2) der Einheit (5) in eine zweite Zielposition und/oder Zielanordnung (P2) innerhalb eines zweiten Handhabungsmoduls (30) der Vorrichtung (10) verbringbar ist.
- wobei das zweite Handhabungsmodul (30) dem ersten Handhabungsmodul (20) in Transportrichtung (TR) nachgeordnet ist,
- wobei das zweite Handhabungsmodul (30) einen zweiten Manipulator (31) umfasst,
- wobei der zweite Manipulator (31) zum klemmenden Entgegennehmen des mindestens einen verbleibenden Stückgutes (2) der Einheit (5) von Stückgüter (2) ausgebildet ist, sowie zum Überführen des mindestens einen Stückgutes (2) in eine zweite Zielposition und/oder Zielanordnung (P2) innerhalb des zweiten Handhabungsmoduls (30).

10. Vorrichtung (10) nach Anspruch 9, wobei das Taktbildungsmodul (40) eine Transporteinheit (41) umfasst, wobei die Transporteinheit (41) zur Bildung der Einheiten (5) zumindest kurzzeitig mit einer gegenüber einer Transportgeschwindigkeit (v3) der geschlossenen Formation (F) erhöhten Geschwindigkeit beweglich ausgebildet ist oder wobei das Taktbildungsmodul (40) einen taktbildenden Manipulator (43) umfasst, wobei der taktbildende Manipulator(43) zum Erfassen einer entsprechende Anzahl an die Einheit (5) bildenden Stückgütern (2) ausgebildet ist.

## Claims

1. A method for handling piece goods (2) being moved one after another in at least one row (1), wherein
- the piece goods (2) are supplied in a transport direction (TR), without spaces immediately one after another as a closed formation (F), to at least one first handling module (20) with a first manipulator (21) for handling the piece goods (2) in a first seizing range (22) assigned to the first manipulator (21);
- wherein, prior to the piece goods (2) entering the at least one first handling module (20), units (5) are formed from at least two piece goods (2) being moved one after another;
- wherein the units (5) are formed by means of a cycle formation module (40) arranged upstream from the first handling module (20),
- wherein a number of piece goods (2) appropriate to form the unit (5) are spatially separated within the cycle formation module (40) from the succeeding piece goods (2) of the closed formation (F),
- wherein a first part (6) of the piece goods (2) of the unit (5) is moved into a first target position and/or target arrangement (P1) within the first handling module (20),
- wherein the at least one piece good (2) to be moved into the first target position and/or target arrangement (P1) within the first handling module (20) is seized in a clamping manner by the first manipulator (21) of the first handling module (20) and spatially separated from the remaining piece goods (2) of the unit (5),
- wherein a second part (7) of the piece goods (2) of the unit (5) is transported through the at least one first handling module (20) without being manipulated and/or handled in the process within the first handling module (20); the method being **characterised in that**
- the second part (7) of the piece goods (2) of the unit (5) is transported through the at least one first handling module (20) to a downstream second handling module (30),
- wherein the second part (7) of the piece goods (2) of the unit (5) is moved into a second target position and/or target arrangement (P2) within the second handling module (30),
- wherein the at least one piece good (2) to be moved into the second target position and/or target arrangement (P2) within the second handling module (30) is seized in a clamping manner by a second manipulator (31) of the second handling module (30).

2. The method according to claim 1, wherein each unit (5) is formed from a defined number of piece goods (2), wherein the piece goods (2) of the unit (5) are moved into at least two spaced-apart target positions and/or target arrangements, in particular, wherein the number of piece goods (2) of the unit (5) corresponds to the number of piece goods (2) for exactly two method steps.

3. The method according to claim 1 or 2, wherein the unit (5) formed consists of two piece goods (2) being moved one after another, wherein one of the piece goods (2) of the unit (5) is moved into the first target position and/or target arrangement (P1) within the first handling module (20), and wherein the other piece good (2) of the unit (5) is moved into the second target position and/or target arrangement (P2) within the second handling module (30),

4. The method according to one of the previous claims, wherein the cycle formation module (40) comprises a transport unit (41) arranged upstream from the first handling module (20), wherein, in order to form the units (5), the transport unit (41) is moved at least briefly at an increased speed compared to a transport speed (v3) of the closed formation (F), or wherein the cycle formation module (40) comprises a cycle-forming manipulator (43), wherein the cycle-forming manipulator (43) seizes a number of piece goods (2) appropriate to form the unit (5) and applies a movement component in transport direction (TR) to the piece goods (2).

5. The method according to one of the previous claims, wherein at least one of the piece goods (2) of the unit (5) preceding in transport direction (TR) is seized first and moved within the at least one first handling module (20) into the first target position and/or target arrangement (P1), or wherein at least one of the piece goods (2) of the unit (5) succeeding in transport direction (TR) is seized first and moved within the at least one first handling module (20) into the first target position and/or target arrangement (P1), or wherein at least one middle piece good (2) of the unit (5) is seized first and moved within the at least one first handling module (20) into the first target position and/or target arrangement (P1).

6. The method according to one of the previous claims, wherein the piece goods (2) that have been moved into a target position and/or target arrangement within the first handling module (20) and/or within the second handling module (30) are moved further continuously in transport direction (TR).

7. The method according to claim 6, wherein the piece goods (2) are moved at a conveying speed corresponding to the transport speed (v3) of the piece goods (2) of the closed formation (F).

8. The method according to one of the previous claims, wherein at least one palletisable layer arrangement or piece good layer is assembled from a plurality of piece goods (2) within the first handling module (20) and/or within the second handling module (30).

9. An apparatus (10) comprising
- at least one transport device (3) via which piece goods (2) of the row (1) following immediately one after another are suppliable, without spaces as closed formation (F), in a transport direction (TR),
- a cycle formation module (40) for the formation of units (5) from at least two piece goods (2) being moved one after the other;
- at least one first handling module (20) with a first manipulator (21) for handling the piece goods (2);
- wherein a first part (6) of the piece goods (2) of the unit (5) is movable into a first target position and/or target arrangement (P1) within the first handling module (20), and
- wherein the first manipulator (21) is designed to receive at least one piece good (2) from the unit (5) of piece goods (2) in a clamping manner and to spatially separate the at least one piece good (2) from the at least one further piece good (2) of the unit (5) and to transfer the at least one seized piece good (2) into a first target position and/or target arrangement (P1) within the first handling module (20), **characterised in that**
- the apparatus (10) is configured to carry out a method according to one of the claims 1 to 8 for handling piece goods (2) being moved one after another in at least one row (1),
- wherein a second part (7) of the piece goods (2) of the unit (5) is movable into a second target position and/or target arrangement (P2) within the second handling module (30) of the apparatus (10),
- wherein the second handling module (30) is arranged downstream in transport direction (TR) from the first handling module (20),
- wherein the second handling module (30) comprises a second manipulator (31),
- wherein the second manipulator (31) is designed to receive the at least one remaining piece good (2) of the unit (5) of piece goods (2) in a clamping manner and to transfer the at least one piece good (2) into a second target position and/or target arrangement (P2) within the second handling module (30).

10. The apparatus (10) according to claim 9, wherein the cycle formation module (40) comprises a transport unit (41), wherein, in order to form the units (5), the transport unit (41) is designed to be movable at least briefly at an increased speed compared to a transport speed (v3) of the closed formation (F), or wherein the cycle formation module (40) comprises a cycle-forming manipulator (43), wherein the cycle-forming manipulator (43) is designed to seize a number of piece goods (2) appropriate to form the unit (5).

## Revendications

1. Procédé de manipulation de produits de détail (2) déplacées les uns derrière les autres en au moins une rangée (1), dans lequel
- les produits de détail (2) sont amenés, en se suivant immédiatement sans espacement, en tant que formation fermée (F) dans une direction de transport (TR) au moins à un premier module de manipulation (20) comprenant un premier manipulateur (21) destiné à manipuler les produits de détail (2) dans une première zone de saisie (22) associée au premier manipulateur (21);
- dans lequel, avant que les produits de détail (2) n'entrent dans ledit au moins un premier module de manipulation (20), des unités (5) sont formées à partir d'au moins deux produits de détail (2) déplacés les uns derrière les autres;
- dans lequel les unités (5) sont formées au moyen d'un module de formation d'horloge (40) disposé en amont du premier module de manipulation (20),
- dans lequel, au sein du module de formation d'horloge (40), un nombre correspondant de produits de détail (2) constituant l'unité (5) est séparé spatialement des produits de détail (2) de la formation fermée (F), qui sont situés en aval,
- dans lequel une première partie (6) des produits de détail (2) de l'unité (5) est déplacée dans une première position cible et/ou disposition cible (P1) au sein du premier module de manipulation (20),
- dans lequel ledit au moins un produit de détail (2) à déplacer au sein du premier module de manipulation (20) dans la première position cible et/ou la disposition cible (P1) est saisi par serrage par le premier manipulateur (21) du premier module de manipulation (20) et est séparé spatialement des produits de détail (2) restants de l'unité (5),
- dans lequel une deuxième partie (7) des produits de détail (2) de l'unité (5) est transportée à travers ledit au moins un premier module de manipulation (20) sans être manipulée et/ou maniée au sein du premier module de manipulation (20); **caractérisé par le fait que**
- la deuxième partie (7) des produits de détail (2) de l'unité (5) est transportée à travers ledit au moins un premier module de manipulation (20) vers un deuxième module de manipulation (30) situé en aval,
- dans lequel la deuxième partie (7) des produits de détail (2) de l'unité (5) est déplacée au sein du deuxième module de manipulation (30) dans une deuxième position cible et/ou disposition cible (P2),
- dans lequel ledit au moins un produit de détail (2) à déplacer au sein du deuxième module de manipulation (30) dans la deuxième position cible et/ou configuration cible (P2) est saisi par serrage par un deuxième manipulateur (31) du deuxième module de manipulation (30).

2. Procédé selon la revendication 1, dans lequel respectivement une unité (5) est formée à partir d'un nombre défini de produits de détail (2), dans lequel les produits de détail (2) de l'unité (5) sont déplacés dans au moins deux positions cibles et/ou dispositions cibles espacées, en particulier dans lequel le nombre de produits de détail (2) de l'unité (5) correspond au nombre de produits de détail (2) pour exactement deux étapes de procédé.

3. Procédé selon la revendication 1 ou 2, dans lequel l'unité formée (5) est constituée de deux produits de détail (2) déplacés l'un derrière l'autre, dans lequel un des produits de détail (2) de l'unité (5) est déplacé dans la première position cible et/ou disposition cible (P1) au sein du premier module de manipulation (20), et dans lequel l'autre produit de détail (2) de l'unité (5) est déplacé dans la deuxième position cible et/ou disposition cible (P2) au sein du deuxième module de manipulation (30).

4. Procédé selon l'une quelconque des revendications précédentes, dans lequel le module de formation d'horloge (40) comprend une unité de transport (41) disposée en amont du premier module de manipulation (20), dans lequel l'unité de transport (41) est déplacée au moins pour peu de temps à une vitesse supérieure à la vitesse de transport (v3) de la formation fermée (F) pour former les unités (5), ou dans lequel le module de formation d'horloge (40) comprend un manipulateur formateur d'horloge (43), dans lequel le manipulateur formateur d'horloge (43) saisit un nombre correspondant de produits de détails (2) formant l'unité (5) et applique une composante de mouvement dans la direction de transport (TR) à ceux-ci.

5. Procédé selon l'une quelconque des revendications précédentes, dans lequel au moins un des produits de détail (2) de l'unité (5) situés en amont dans la direction de transport (TR) est saisi en premier et est déplacé, au sein dudit au moins un premier module de manipulation (20), dans la première position cible et/ou disposition cible (P1), ou dans lequel au moins un des produits de détail (2) de l'unité (5) situés en aval dans la direction de transport (TR) est saisi en premier et est déplacé, au sein dudit au moins un premier module de manipulation (20), dans la première position cible et/ou disposition cible (P1), ou dans lequel au moins un produit de détail (2) de l'unité (5) qui est situé au centre est saisi en premier et est déplacé, au sein dudit au moins un premier module de manipulation (20), dans la première position cible et/ou disposition cible (P1).

6. Procédé selon l'une quelconque des revendications précédentes, dans lequel les produits de détail (2) déplacés dans une position cible et/ou une disposition cible continuent à se déplacer de manière continue dans la direction de transport (TR) au sein du premier module de manipulation (20) et/ou au sein du deuxième module de manipulation (30).

7. Procédé selon la revendication 6, dans lequel les produits de détail (2) sont déplacées à une vitesse de convoyage qui correspond à la vitesse de transport (v3) des produits de détail (2) de la formation fermée (F).

8. Procédé selon l'une quelconque des revendications précédentes, dans lequel au moins une disposition de couches palettisable ou une couche de produits de détail palettisable est assemblé(e) à partir d'une pluralité de produits de détail (2) au sein dudit au moins un premier module de manipulation (20) et/ou au sein du deuxième module de manipulation (30).

9. Dispositif (10) comprenant
- au moins un dispositif de transport (3) par l'intermédiaire duquel des produits de détail (2) immédiatement successifs de la rangée (1) peuvent être amenés sans espacement, en tant que formation fermée (F), dans une direction de transport (TR);
- un module de formation d'horloge (40) pour la formation d'unités (5) à partir d'au moins deux produits de détail (2) déplacés les uns derrière les autres;
- au moins un premier module de manipulation (20) muni d'un premier manipulateur (21) pour la manipulation des produits de détail (2);
- dans lequel une première partie (6) des produits de détail (2) de l'unité (5) est déplacée dans une première position cible et/ou disposition cible (P1) au sein du premier module de manipulation (20),
- dans lequel le premier manipulateur (21) est conçu pour recevoir par serrage au moins un produit de détail (2) de l'unité (5) de produits de détail (2), ainsi que pour séparer spatialement ledit au moins un produit de détail (2) dudit au moins un autre produit de détail (2) de l'unité (5) et pour transférer ledit au moins un produit de détail (2) saisi dans une première position cible et/ou disposition cible (P1) au sein du premier module de manipulation (20), **caractérisé par le fait que**
- le dispositif (10) est conçu pour mettre en œuvre un procédé de manipulation de produits de détail (2) déplacés les uns derrière les autres en au moins une rangée (1), selon l'une quelconque des revendications 1 à 8,
- dans lequel une deuxième partie (7) des produits de détail (2) de l'unité (5) peut être déplacée dans une deuxième position cible et/ou disposition cible (P2) au sein du deuxième module de manipulation (30),
- dans lequel le deuxième module de manipulation (30) est disposé en aval du premier module de manipulation (20) dans la direction de transport (TR),
- dans lequel le deuxième module de manipulation (30) comprend un deuxième manipulateur (31),
- dans lequel le deuxième manipulateur (31) est conçu pour recevoir par serrage ledit au moins un produit de détail restant (2) de l'unité (5) de produits de détail (2), ainsi que pour transférer ledit au moins un produit de détail (2) dans une deuxième position cible et/ou disposition cible (P2) au sein du deuxième module de manipulation (30).

10. Dispositif (10) selon la revendication 9, dans lequel le module de formation d'horloge (40) comprend une unité de transport (41), dans lequel l'unité de transport (41) est conçue pour être mobile, au moins pour peu de temps, à une vitesse supérieure à une vitesse de transport (v3) de la formation fermée (F) pour former les unités (5), ou dans lequel le module de formation d'horloge (40) comprend un manipulateur formateur d'horloge (43), dans lequel le manipulateur formateur d'horloge (43) est conçu pour saisir un nombre correspondant de produits de détail (2) formant l'unité (5).
